# EUROPEAN PATENT APPLICATION

(11) **EP 4 297 441 A1**
(43) Date of publication of application: **27.12.2023**
(21) Application number: 22755896.2
(22) Date of filing: 28.01.2022
(51) Int. Cl.: H04W 4/06, H04W 84/10

(54) **RELAY DEVICE AND METHOD**

(30) Priority: 22.02.2021 JP 2021026427
(71) Applicant: Sony Group Corporation, Tokyo 108-0075 (JP)
(72) Inventor: TAKANO, Hiroaki, Tokyo 108-0075 (JP); KASAI, Hirofumi, Tokyo 108-0075 (JP); MATSUMURA, Tomoaki, Tokyo 108-0075 (JP); KURIKI, Hiroto, Tokyo 108-0075 (JP)
(74) Representative: Witte, Weller & Partner Patentanwälte mbB
(86) International application number: PCT/JP2022/003366
(87) International publication number: WO 2022/176573

(57) **Abstract**

A relay device (30) is provided in a manner of corresponding to one or a plurality of first user plane functions (UPF). The relay device (30) includes a control unit (33) and a transmission unit (31). The control unit (33) converts multicast data into unicast data addressed to one or a plurality of terminal devices. The transmission unit (31) transmits the unicast data to the one or plurality of terminal devices.

## Description

### Field

The present disclosure relates to a relay device and a method.

### Background

Patent Literature 1 discloses, as a technology of performing a multicast by using LTE, a technology of transmitting eMBMS data to one or a plurality of end nodes via unicast transmission, for example.

### Citation List

### Patent Literature

Patent Literature 1: JP 2017-516402 A

### Summary

### Technical Problem

In the 3rd generation partnership project (3GPP), a study on a multicast using 5G has been started.

In addition, a study on a next-generation mobile communication system that can be used by various entities according to a regional need and an individual need is also in progress. The next-generation mobile communication system includes, separately from a 5G service for the whole country by a mobile phone operator, a mechanism in which various entities such as a local company and a local government can construct and use a network (local cellular network) spot-flexibly in their own buildings and sites, for example.

Since an area in which the local cellular network is provided is a limited area, it is not so difficult to specify a device that desires to perform reception in a multicast. Thus, there is a great demand for the multicast in the local cellular network.

In a case where there is a base station supporting a standard of a 3GPP multicast, when one multicast packet is transferred to this base station, the base station can wirelessly transmit the multicast packet to a plurality of pieces of UE. However, in the local cellular network, a base station that does not support the standard of the 3GPP multicast is often arranged since a system is often constructed by a low-cost core network, for example.

Thus, the present disclosure provides a mechanism capable of realizing a multicast in a local cellular network in which a base station that does not support a standard of a 3GPP multicast.

Note that the above problem or object is merely one of a plurality of problems or objects that can be solved or achieved by a plurality of embodiments disclosed in the present specification.

### Solution to Problem

According to the present disclosure, a relay device is provided. The relay device is provided in a manner of corresponding to one or a plurality of first user plane functions (UPF). The relay device includes a control unit and a transmission unit. The control unit converts multicast data into unicast data addressed to one or a plurality of terminal devices. The transmission unit transmits the unicast data to the one or plurality of terminal devices.

### Brief Description of Drawings

FIG. 1 is a view illustrating an example of a 5G cellular network configuration.
FIG. 2 is a view illustrating an example of a 4G cellular network configuration.
FIG. 3 is a view schematically illustrating an example of a cellular network.
FIG. 4 is a view schematically illustrating an example of the cellular network.
FIG. 5 is a view schematically illustrating an example of the cellular network.
FIG. 6 is a view schematically illustrating an example of a private network according to a first embodiment of the present disclosure.
FIG. 7 is a view illustrating a configuration example of a relay device that functions as a copy for a UPF according to the first embodiment.
FIG. 8 is a view illustrating a configuration example of a relay device that functions as a copy for UE according to the first embodiment.
FIG. 9 is a view for describing an example of a multicast performed in the private network according to the first embodiment.
FIG. 10 is a view illustrating an example of a private network according to a third embodiment of the present disclosure.
FIG. 11 is a sequence diagram illustrating a flow of processing of a multicast according to a fifth embodiment of the present disclosure.
FIG. 12 is a view illustrating an example of a multicast service according to a sixth embodiment of the present disclosure.
FIG. 13 is a view illustrating an example of the multicast service according to the sixth embodiment of the present disclosure.
FIG. 14 is a view illustrating an example of the multicast service.
FIG. 15 is a view for describing a multicast according to a seventh embodiment of the present disclosure.
FIG. 16 is a sequence diagram illustrating a flow of a multicast according to an eighth embodiment of the present disclosure.
FIG. 17 is a sequence diagram illustrating a flow of an attach procedure.
FIG. 18 is a view illustrating an example of a protocol stack between UE and a Core Network/HSS.
FIG. 19 is a view for describing an application example of a technology of the present disclosure. Description of Embodiments

In the following, embodiments of the present disclosure will be described in detail with reference to the accompanying drawings. Note that the same reference signs are assigned to components having substantially the same functional configuration, and overlapped description is omitted in the present specification and the drawings.

Furthermore, in the present specification and the drawings, similar components of the embodiments may be distinguished by assignment of different numbers or alphabets after the same reference sign. However, in a case where it is not specifically necessary to distinguish the similar components from each other, only the same reference sign is assigned.

Each of one or a plurality of embodiments (including an example and a modification example) described in the following can be performed independently. On the other hand, at least a part of a plurality of embodiments described in the following may be appropriately combined with at least a part of the other embodiments. The plurality of embodiments may include novel features different from each other. Thus, the plurality of embodiments can contribute to solving different objects or problems, and can exhibit different effects.

Note that the description will be made in the following order.
1. Introduction
   1.1. Cellular network
   1.2. Related art
2. Outline of a proposed technology
3. First embodiment
   3.1. Private network
   3.2. Copy for a UPF
   3.3. Copy for UE
   3.4. Example of a multicast
4. Second embodiment
5. Third embodiment
6. Fourth embodiment
7. Fifth embodiment
8. Sixth embodiment
9. Seventh embodiment
10. Eighth embodiment
11. Application example
12. Conclusion

### <<1. Introduction>>

### <1.1. Cellular network>

In the third generation partnership project (3GPP), radio access technologies such as long term evolution (LTE) and new radio (NR) have been studied and formulated. For example, in 3GPP TS23.401 and TS23.501, technologies related to a cellular network are studied and formulated.

Note that it is assumed that LTE includes LTE-Advanced (LTE-A), LTE-Advanced Pro (LTE-A Pro), and Evolved Universal Terrestrial Radio Access (EUTRA). In addition, it is assumed that NR includes a new radio access technology (NRAT) and Further EUTRA (FEUTRA). Note that a single base station may manage a plurality of cells. In the following description, a cell corresponding to LTE is referred to as an LTE cell, and a cell corresponding to NR is referred to as an NR cell.

NR is a radio access technology (RAT) of a next generation of (fourth generation: 4G) such as LTE or the like (fifth generation: 5G). NR is the radio access technology that can support various use cases including enhanced mobile broadband (eMBB), massive machine type communications (mMTC), and ultra-reliable and low latency communications (URLLC). NR has been studied to be a technical framework corresponding to usage scenarios, requirements, arrangement scenarios, and the like in these use cases.

In addition, a terminal device (also referred to as a mobile station, a mobile station device, or a terminal) connected to the cellular network may be referred to as user equipment (UE) or a terminal.

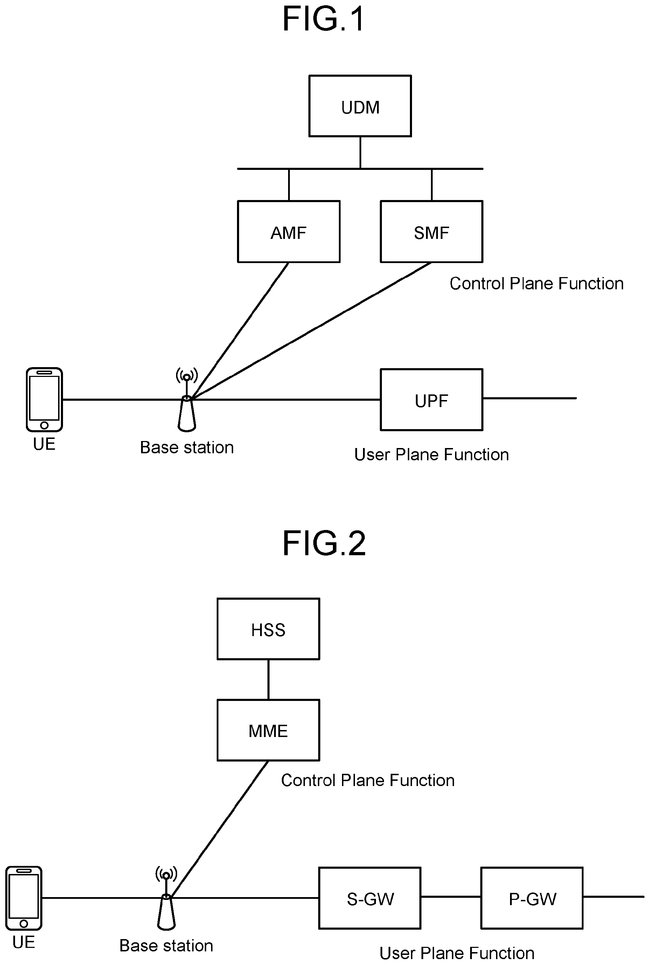

FIG. 1 is a view illustrating an example of a 5G cellular network configuration. In addition, FIG. 2 is a view illustrating an example of a 4G cellular network configuration.

The cellular network includes a radio access network (RAN) and a core network (CN). The RAN is a radio system between a base station and a terminal. The CN mainly performs permission and session management of when the terminal is connected to the network. The CN also includes a control plan function and a user plane function in both 4G and 5G.

In the 4G cellular network illustrated in FIG. 2, various kinds of information related to the UE, such as subscriber information of the UE and information used for generation of an encryption key are stored in a server that functions as a home subscriber system (HSS).

Note that in 5G, unified data management (UDM) has a function similar to that of the HSS. Hereinafter, although the HSS will be described, the same applies to a case of the UDM.

The control plane function acquires information such as subscriber information of accessed UE from the HSS, and determines, by using the acquired subscriber information, whether the UE can be connected to the network. In addition, the control plane function generates an encryption key for encryption. The UE is equipped with subscriber identity module (SIM) card. The SIM card stores a subscriber number called an international mobile subscriber identity (IMSI). In order for the UE to be connected to the network, information of the UE associated with the subscriber number of the SIM card equipped in the UE needs to be stored in the HSS.

In order for the UE to be connected to the network, a function of a control plane (C-plane) of the CN is required. In a case of 4G, a mobility management function (MME) illustrated in FIG. 2 plays this role. In a case of 5G, an access management function (AMF) or a session management function (SMF) illustrated in FIG. 1 plays the role.

In a case where the UE is connected to the network and performs transmission and reception of data, the function of the U-plane of the CN is required. In a case of 4G, a serving gateway (S-GW) and a packet data network gateway (P-GW) illustrated in FIG. 2 play this role. In a case of 5G, a user plane function (UPF) illustrated in FIG. 1 plays the role.

The P-GW of 4G and the UPF of 5G play a role as a gateway serving as a boundary between the CN and the general Internet. In a case where the CN is also arranged in the general Internet, a user plane function of a core network called a CN-U corresponding to the P-GW or the UPF can be regarded as a gateway arranged at a boundary between the CN and a general application.

### <1.2. Related art>

### <Mobile edge computing and local arrangement of a CN>

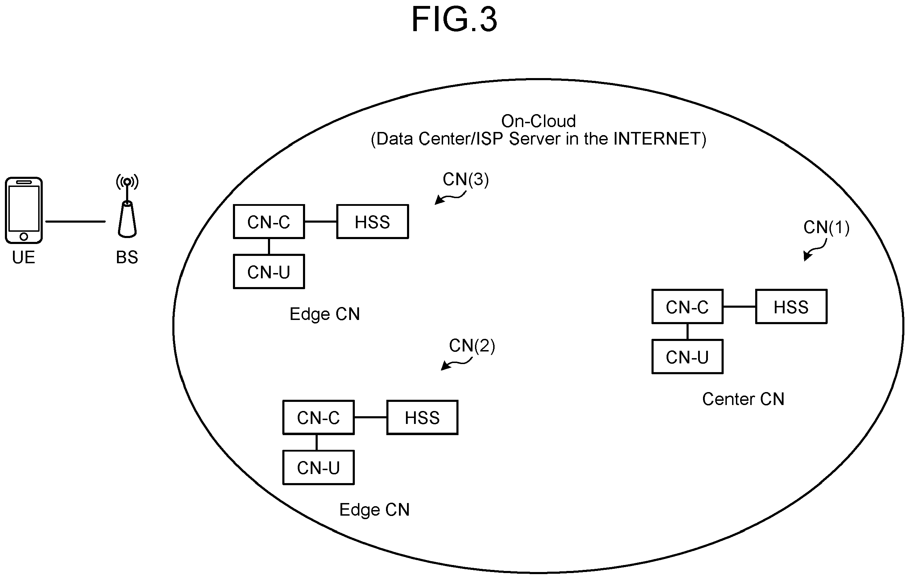

Incidentally, it is predicted that a plurality of CNs is distributed and arranged in the cellular network. FIG. 3 is a view schematically illustrating an example of the cellular network. In a cellular network 1, a plurality of core networks (CNs) is arranged in a distributed manner. In FIG. 3, three CN(1) to CN(3) are arranged.

Each of the CNs includes a node of a control plane function (CN-C) and a node of a user plane function (CN-U). The CN-C is connected to an HSS in a manner capable of communication, and determines whether a UE can be connected to the network. The CN-U transfers user data between a packet data network (PDN) or a data network (DN) and a RAN.

In FIG. 3, the core network (CN(3)) is arranged near the UE and a base station (BS). As described above, it is known that a delay required in a cellular part such as the RAN is reduced when the core network is arranged near the UE and the base station (BS). Thus, it is expected that the number of core networks arranged at an edge of the Internet will increase.

In FIG. 3, two CN(2) and CN(3) are arranged as edge core networks (edge CNs) at the edge of the Internet. It is convenient when a center core network to be a master is arranged on the Internet in addition to the core networks arranged at the edge. In FIG. 3, the CN(1) is arranged as the center core network (center CN). When the core network is not arranged at the edge, management is performed by utilization of the center CN. In the future, it is expected that a large number of core networks (CNs) are arranged at the edge of the Internet in various places around the world in a situation in which the center CN is present in such a manner.

For example, it is considered that the core network is arranged in a LAN in a factory, a hospital, or an office. In this case, at least the base station is arranged in a local area such as the factory, hospital, or office. In addition, it is considered that the core network is arranged in the local area similarly to the base station or is arranged on the Internet near the local area. In any case, such a local cellular system requires a low-cost system. These are sometimes referred to as private 4G or private 5G.

### <Scaling of a UPF>

As one index of a capacity of the user plane function realized by the UPF or SGW-PGW, there is a maximum throughput that can be processed. This is, for example, an index indicating that user data (data of a user plane) of 100 Mbps can be processed at the maximum.

It is assumed that the maximum throughput of the UPF of the core network is 100 Mbps. In addition, it is assumed that one base station is connected to the core network, and that a capacity (maximum throughput) of this base station is 100 Mbps. In that case, when one piece of UE uses the network, the UE may enjoy a speed of 100 Mbps. That is, the UE can transmit and receive data at 100 Mbps.

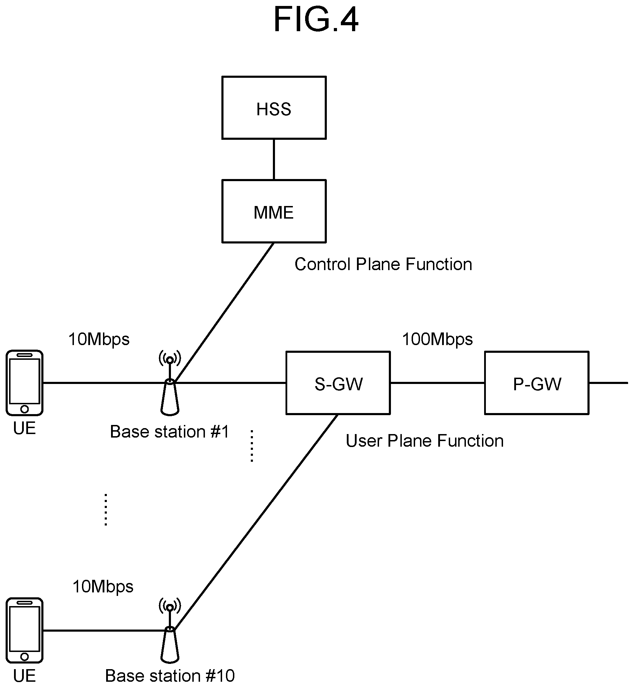

On the other hand, as illustrated in FIG. 4, it is assumed that 10 base stations each of which has a capacity of 100 Mbps are connected to a core network, and one piece of UE uses the network via one base station. Here, FIG. 4 is a view schematically illustrating an example of the cellular network. In this case, capacities of user plane functions (S-GW and P-GW in FIG. 4) of the core network become bottlenecks, and a throughput of each piece of UE decreases to 10 Mbps at the maximum.

In a case where the number of base stations and the number of pieces of UE connected to the core network are increased in such a manner, it is necessary to improve the capacity of the user plane function of the core network in order to maintain a predetermined throughput.

Here, as a method of improving (scaling) a capacity of a user plane (U-plane) of the core network, a method of improving a capacity itself of a computer that executes a function of the U-plane is considered. For example, in a case where processing of the U-plane is performed by a virtual machine (virtual computer) in a cloud data center, the capacity of the U-plane can be improved by replacement of the capacity of the virtual machine with a high capacity. However, in a case of a significant increase, such as a case where the number of base stations becomes 10 times and the number of terminals becomes 10 times, it is considered that the improvement of the capacity of the U-plane cannot be supported by the replacement of the capacity of the computer (virtual machine) itself.

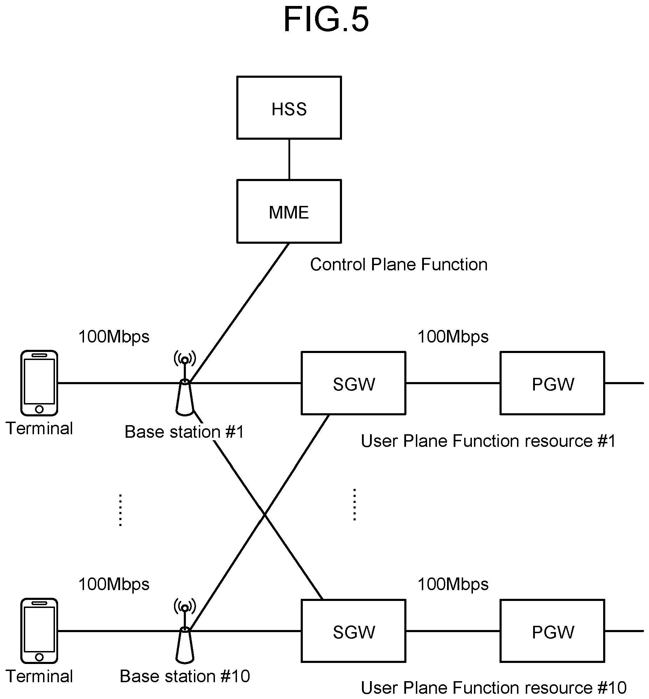

As another method of improving the capacity of the U-plane, a method of linearly increasing the function of the U-plane is considered. For example, in FIG. 5, processing of a U-plane is performed by 10 user plane function resources #1 to #10. Note that FIG. 5 is a view schematically illustrating an example of the cellular network.

As illustrated in FIG. 5, when a plurality of user plane function resources performs the processing of the U-plane, a capacity of the U-plane can be improved as compared with a case where one user plane function resource performs the processing of the U-plane.

A soil pipe for communication called a PDU session is prepared for each piece of UE, and processing between the UE and the core network is performed. Thus, a plurality of U-plane functions (UPF) can perform parallel processing for each PDU session. Thus, it can be said that a method of preparing a plurality of U-plane functions is desirable as a method of improving (scaling) the capacity of the U-plane.

### <Multicast in a private network>

As described above, the private network is a cellular service with a limited area such as a factory, a hospital, a school, or an office. There is a request to perform a broadcast or a multicast in such a local private area in which the private network is provided.

Since the area in which the private network is provided is a limited area, it is not so difficult to specify a device that desires to perform reception in the multicast. Thus, it is considered that there is a large demand for the multicast in the private network. For example, in a case where IoT devices in the private network are controlled in cooperation, the control can be performed efficiently by utilization of the multicast.

A system that dynamically manages frequencies used for communication, such as a spectrum access system (SAS) is considered to be compatible with the multicast. For example, such a system determines whether a predetermined frequency can be used each time communication is performed, and performs the communication by using the predetermined frequency when the predetermined frequency can be used.

For example, a use case in which a system such as the SAS is used in a case where a multicast of a goal scene or the like is performed in a stadium is considered. In this case, for example, after acquiring a frequency used for communication, the SAS performs, for tens of thousands of spectators in the stadium, the multicast of the goal scene in a private network.

In the private network, the broadcast can be considered as a special case of the multicast. Thus, it is considered important to realize a mechanism that realizes the multicast in the private network.

### <Multicast using an Internet protocol >

Here, a multicast using an Internet protocol will be described. The multicast is one-to-N communication and is a service that provides one packet to a plurality of destinations.

In an Internet protocol (IP) multicast, one IP packet is generated and transmitted to a plurality of terminal devices. A destination IP address of one IP packet includes a specific IP address reserved for the multicast packet. The specific IP address is, for example, 224.10.1.1 or 224.10.1.2.

Different reserved IP addresses are used in different multicast packets, for example, in a case where pieces of content (such as programs) are different. For example, it is assumed that 224.10.1.1 described above is used as a reserved IP address of a certain multicast packet. In this case, in a multicast packet different from the above multicast packet, a reserved IP address (such as 224.10.1.2 or the like) different from 224.10.1.1 is used.

A router in the middle of a network routes a packet in such a manner that a desired multicast packet reaches a terminal device that desires to receive the multicast packet. The terminal device that receives the multicast packet checks a destination IP address of the received multicast packet. In a case where the received packet is the desired multicast packet, the terminal device receives the packet. On the other hand, in a case where the received packet is not the desired multicast packet, the terminal device discards the packet.

A multicast defined as a function of the Internet in such a manner cannot operate in a cellular system such as 4G or 5G. This is because, in a network of the cellular system, packet routing using an IP address is not performed with respect to a packet delivered to the terminal device.

When reaching a user plane function (UPF), a packet entering from the outside of the network of the cellular system is put in a soil pipe of communication made by a GTP tunnel protocol prepared for each piece of UE, and is carried to the UE. In such a manner, in the network of the cellular system, a packet is not carried by utilization of the IP address.

Thus, in the cellular system, it is difficult to realize a multicast service using the Internet protocol.

Furthermore, in the multicast using the Internet protocol, UE participating in a multicast group informs the closest router of own IP address by using a protocol called Internet group management protocol (IGMP). Here, the closest router is a UPF or a router in a subsequent stage (on an Internet side) of the UPF in a case of the cellular system.

However, in the multicast using the Internet protocol, a special IP address indicating a multicast is used as a destination IP address at the time of the transmission. Thus, the UPF cannot pack the multicast packet in the GTP tunnel addressed to the UE participating in the multicast Group. In addition, it is considered that there is a case with no room for implementing a protocol such as the IGMP in an IoT device.

### <Multicast according to a standard of an MBMS of 3GPP>

As described above, it is difficult to realize a multicast service using an Internet protocol in the cellular system. Thus, in 3GPP standardization work, a multicast that operates in the cellular network has been standardized (3GPP TS 23.246 multimedia broadcast multicast service (MBMS)).

In the multicast according to this standard, when the multicast packet is delivered to each base station, the base station transmits one multicast packet in a radio section. A large number of pieces of UE that desire to receive the multicast packet simultaneously receive the multicast packet transmitted by the base station. As a result, the multicast in the cellular system is realized.

By using this method, although the multicast can be performed in both a wired section and a wireless section, an MBMS protocol of the 3GPP needs to be implemented in the base station and the core network in order to use this method.

In the private 5G and the private 4G that are examples of the private network described above, it is considered that a system is often constructed by a small and low-cost base station or a low-cost core network. It is considered that such a small base station and a core network do not support the MBMS, which is prescribed by the 3GPP, in many cases.

Thus, it is desired in the private network to realize a multicast using a device that does not support a mechanism of a full-specification multicast standardized by the 3GPP.

### <<2. Outline of a proposed technology>>

As described above, in the private network, it is difficult to use a multicast defined by the Internet. In addition, even when being 4G, actually, a multicast defined for the cellular system is often not equipped in the small base station or the small core network. Thus, it is difficult to use the multicast defined for the cellular system in the private network constructed by these small base station and small core network.

Furthermore, as described above, in the private network, it is conceivable to control a processing capacity of one UPF to be low by arranging a plurality of user plane functions (UPFs) (set of S-GW and P-GW in 4G) in the core network. As described above, in the private network in which the plurality of UPFs is arranged, a method of determining to which UPF a multicast packet is copied and transferred is required.

Furthermore, in order to use the multicast in the private network, a mechanism of performing the multicast of the multicast packet arriving at the UPF to a plurality of pieces of UE is required.

As described above, in a case where there is a base station supporting the standard of the 3GPP multicast, when one multicast packet is transferred to this base station, the base station can wirelessly transmit the multicast packet to a plurality of pieces of UE. However, in the private network, it is considered that a base station that does not support the standard of the 3GPP multicast is arranged in many cases. Thus, in the proposed technology, an individual packet is prepared for each piece of UE that desires to receive the multicast packet beyond the UPF (on the Internet side). Thus, in the proposed technology, one multicast packet is copied according to the number of pieces of individual UE, and an IP address of each piece of UE is reassigned thereto.

This IP address for each piece of UE is used for putting the multicast packet into the GTP tunnel in the UPF rather than for routing the multicast packet. That is, the UPF transmits the multicast packet to each piece of UE by putting the multicast packet in the GTP tunnel on the basis of the IP address of the UE. Thus, the proposed technology has a feature of determining whether an IP address is allocated to UE to which the multicast packet is transmitted.

Here, an outline of a flow of the multicast including the above-described conventional technology will be described.

### (Flow of a multicast of an Internet protocol)

Step 1: The UE informs the closest router of an own IP address by using an IGMP, and informs that reception of a multicast packet is desired. At this time, the UE also informs of a multicast packet of which multicast channel is desired to be received.

Step 2: In order to transfer the multicast packet to a network in which the packet grasped in Step 1 is present, a router that needs to copy the multicast packet copies the multicast packet. The IP address reserved for the multicast packet is used until the end (the multicast packet is transmitted to the UE).

Step 3: The UE receives the delivered multicast packet in a case where reception thereof is desired by itself.

### (Flow of a multicast of the 3GPP standard (4G))

Step 1: The UE informs the core network of a desire for reception of a multicast packet. At this time, the UE also informs of a multicast packet of which multicast channel is desired to be received.

Step 2: In the core network section, in order to transfer the multicast packet to a network in which the multicast packet grasped in Step 1 is present, a router that needs to copy the multicast packet copies the multicast packet. The IP address reserved for the multicast packet is used until the end. Note that the multicast packet is directly delivered to a base station without utilization of the UPF.

The multicast packet delivered to the base station is transmitted as one multicast packet from the base station, and is simultaneously received by a plurality of pieces of UE in a wireless section.

Step 3: Each piece of the UE receives the delivered multicast packet in a case where reception thereof is desired by itself.

In such a manner, the multicast is realized by utilization of the core network and the base station corresponding to the multicast of the 3GPP standard (4G).

Note that although having been created in 4G, a standard related to the multicast has not yet been created in 5G.

### (Flow of a multicast of the proposed technology)

Step 1: The UE informs the core network of a desire for reception of a multicast packet. At this time, the UE also informs of a multicast packet of which multicast channel is desired to be received.

Step 2: In order to transfer the multicast packet to a network in which the multicast packet grasped in Step 1 is present, a router arranged in a limited place (example of a relay device (described later)) copies the packet instead of a specific router. In addition, the IP address reserved for the multicast packet is not used to the end, and is changed by the router, which copies the packet, before the UPF to an IP address assigned to each piece of UE, for example. Note that in the wireless section, in order to prepare a packet for each piece of UE, the multicast packet is copied immediately before the UPF. The copied packet is transmitted to the UE through the GTP tunnel.

Step 3: The UE receives the delivered multicast packet in a case where reception thereof is desired by itself.

As described above, in the multicast of the proposed technology, the multicast packet is delivered to the router immediately before the UPF by utilization of the IP address assigned for the multicast. There is a difference from the multicast of the conventional Internet protocol in a point that a position where the router is arranged is set in consideration of a cost and an arrangement position of the UPF.

In addition, a packet is prepared for each piece of UE by copying of the multicast packet by the router immediately before the UPF. At this time, the IP address of each piece of UE is reassigned to the IP address assigned for the multicast. At this time, the router that copies the multicast packet checks whether an individual IP address is assigned to each piece of UE, and acquires the individual IP address of the UE.

As described above, the router (example of the relay device) according to the proposed technology is a device that copies the multicast packet for the UE (copy for UE). That is, the router according to the proposed technology converts a multicast packet (example of multicast data) into a packet (example of unicast data) addressed to a plurality of pieces of UE (terminal devices), and transmits the converted packet to the plurality of pieces of UE. The router according to the proposed technology is arranged for each of one or a plurality of UPFs.

### <<3. First embodiment>>

Here, in order for UE that belongs to a private network to receive a multicast service, for example, a method of starting an application from the UE, performing connection to a multicast server on a network side, and then performing registration for receiving the multicast service is considered. However, since a procedure of this method is complicated, a simpler method is desired.

For example, a method in which UE performs registration for receiving the multicast service by using an ID associated with a SIM of the UE, such as an IMSI or SUPI in advance and pieces of UE that receive the multicast service are grouped is conceivable. However, even when the pieces of UE that receive the multicast service are grouped, information of an UPF to which the UE belongs and information of an IP address of the UE are required in order for the UE to actually receive the multicast service. These pieces of information are used to route the multicast packet.

Usually, the information of the UPF to which the UE belongs or the information related to the IP address of the UE needs to be informed by the UE by an access to a Server that is on a network side and that provides the multicast service. However, a procedure of this method in which the UE performs informing is complicated.

A multicast may include a plurality of channels (programs and sessions). Thus, in order to distinguish the plurality of channels, an entity that observes a source address of the multicast packet is required in the end. When the entity having such a function is arranged at all locations where the multicast packet arrives, the number of entities increases and a cost also increases, whereby realization thereof is difficult.

Thus, when the UPF used for each piece of UE or the UPF used by the multicast packet is known, there is a possibility that the private network can be configured more easily by the method of determining the UPF that carries the multicast packet. Note that the UPF used by the multicast packet can be known by monitoring of the source IP address of the multicast packet.

### <3.1. Private network>

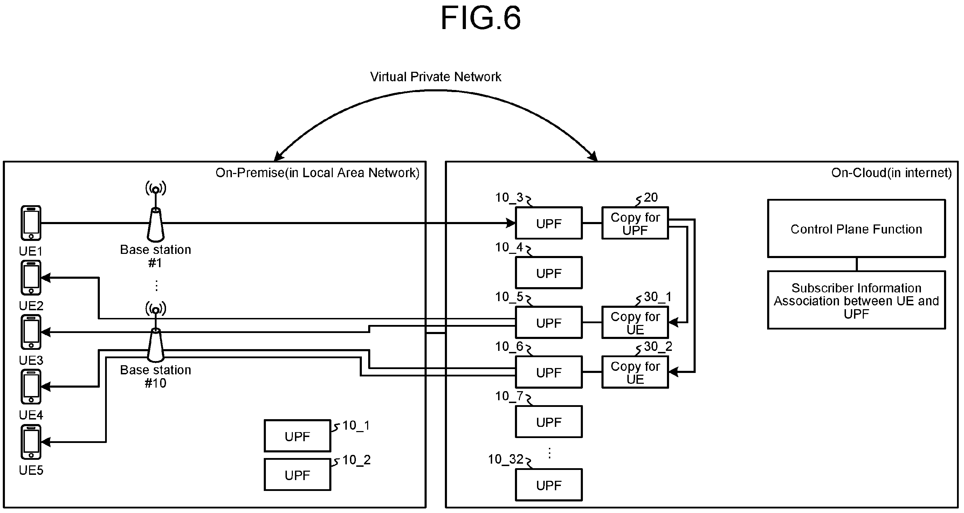

FIG. 6 is a view schematically illustrating an example of the private network according to the first embodiment of the present disclosure.

The private network illustrated in FIG. 6 is a virtual private network in which a part of a function of the core network is installed in a local area network (LAN) (on-premise) and a part of the function of the core network is installed on the Internet (on-cloud).

In FIG. 6, a plurality of pieces of UE (UE 1 to UE 5), base stations (base stations #1 to #10), and a part of the UPFs (UPF 10_1 and 10_2) are installed in the LAN. In addition, the remaining UPFs (UPF 10_3 to 10_32), relay devices (copy for a UPF 20 and copy for UE 30), and a control plane function are installed, for example, in a data center of a cloud provider on the Internet.

### [UPF]

In the private network according to the present embodiment, the UPF to which the UE that transmits the multicast packet belongs is arranged in a limited manner. That is, the UPF 10 (uplink UPF) (example of a second UPF) that performs uplink processing of the multicast packet is arranged in a limited manner.

In addition, in the private network according to the present embodiment, the UPF 10 to which the UE that receives the multicast packet belongs is arranged in a limited manner. That is, a UPF (downlink UPF) (example of a first UPF) that performs downlink processing of the multicast packets is arranged in a limited manner.

The limited uplink UPF and downlink UPF are grasped on the network side. UE that transmits the multicast packet is associated to use the limited uplink UPF by a subscriber file (subscriber information) (association between UE and UPF). In addition, UE that receives the multicast packet is associated to use the limited downlink UPF by the subscriber file.

Note that the uplink UPF herein means a UPF that transmits the multicast packet in the uplink. That is, in a case of normal traffic other than the multicast packet, the uplink UPF performs both uplink and downlink processing. In addition, the downlink UPF means a UPF that receives the multicast packet by the downlink. That is, in a case of the normal traffic other than the multicast packet, the downlink UPF performs both the uplink and downlink processing.

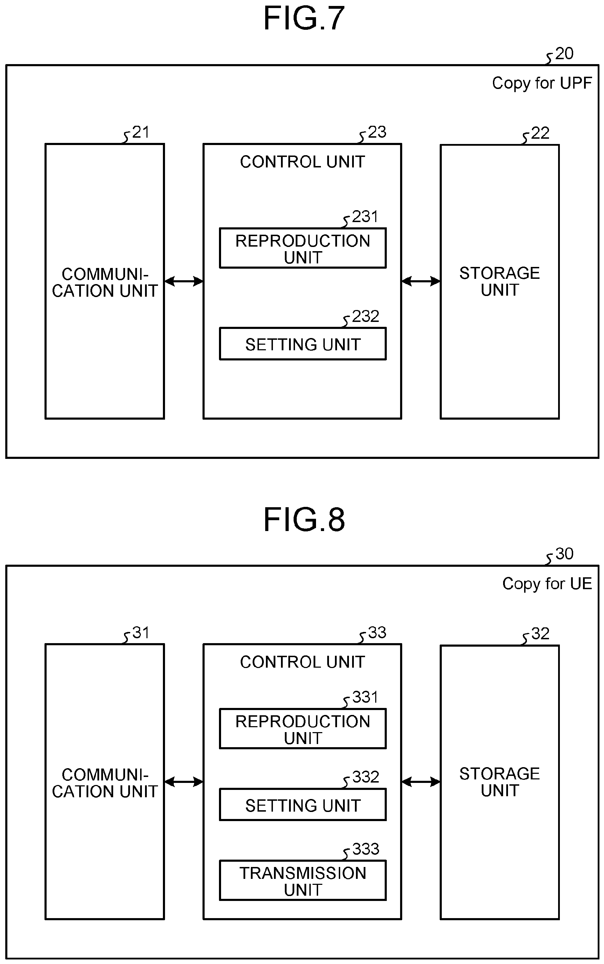

Here, types of packets processed by the UPFs 10_1 to 10_32 are illustrated in Table 1. Note that the UPF IDs illustrated in Table 1 are pieces of information that identify the UPFs. For example, the UPF IDs illustrated in Table 1 correspond to numbers at the ends of the UPFs 10_1 to 10_32 illustrated in FIG. 7. As illustrated in Table 1, the UPFs 10_1, 10_2, 10_4, 10_7,..., and 10_32 perform uplink and downlink processing of a unicast packet. In addition, the UPF 10_3 performs uplink processing of the multicast packet. In addition, the UPF 10_5 performs downlink processing of the multicast packet. The UPF 10_6 performs the downlink processing of the multicast packet and the uplink and downlink processing of the unicast packet.

**Table 1**

| UPF ID | Multicast/Unicast |
|---|---|
| 1 | Unicast |
| 2 | Unicast |
| 3 | Multicast uplink |
| 4 | Unicast |
| 5 | Multicast downlink |
| 6 | Multicast downlink and unicast |
| 7 | Unicast |
| ⋮ | ⋮ |
| 32 | Unicast |

That is, in the UPF 10_1 to 10_32 illustrated in FIG. 6, the UPF 10_3 is the uplink UPF, and the UPFs 10_5 and 10_6 are the downlink UPFs.

Note that setting of the UPFs as illustrated in Table 1 is performed by a resource management function (not illustrated).

### [Copy for a UPF]

Furthermore, in the private network according to the present embodiment, a relay device (copy for a UPF 20) (example of a second relay device) is arranged to determine to which UPF a multicast packet output from the uplink UPF is returned. The copy for a UPF 20 is provided in a manner of corresponding to one or a plurality of uplink UPFs.

Here, as described above, in the private network according to the present embodiment, the UPF 10_3 (uplink UPF) to which the UE that transmits the multicast packet belongs is arranged in a limited manner. Thus, an entity (copy for a UPF 10) for determining to which UPF 20 the multicast packet output from the uplink UPF is to be returned may be arranged in the vicinity of the uplink UPF. Thus, the number of installed Copies for a UPF 20 can be controlled to the minimum necessary.

The copy for a UPF 20 checks a destination IP address of the packet output from the uplink UPF. When the destination IP address is an IP address for the multicast, the copy for a UPF 20 identifies that the packet output from the uplink UPF is the multicast packet. Examples of the IP address for the multicast include 224.0.0.0.

The copy for a UPF 20 transmits the identified multicast packet to the UPF 10 to which the UE that receives the multicast packet belongs (downlink UPF). In a case where there is a plurality of downlink UPFs, the copy for a UPF 20 reproduces the multicast packet and performs transmission thereof to each of the downlink UPFs.

For example, in the example of FIG. 6, the copy for a UPF 20 reproduces the multicast packet and performs transmission thereof to the UPFs 10_5 and 10_6.

At this time, the copy for a UPF 20 may reassign an IP address for going to the UPF 10 as a destination IP address of the reproduced multicast packet. Alternatively, without reassigning the destination IP address, the copy for a UPF 20 may designate an IP address of the downlink UPF in a routing table in such a manner that the reproduced multicast packet goes to the target downlink UPF. In practice, the IP address of the UPF 10 which IP address is set in the routing table by the copy for a UPF 20 is desirably an IP address of an entity immediately before the UPF 10 (relay device) (copy for UE 30). This is because the multicast packet is converted into a packet addressed to the UE in the copy for UE 30 as described later.

### [Copy for UE 30]

In the private network according to the present embodiment, the relay device (copy for UE 30) is arranged to determine to which piece of UE a multicast packet output from the copy for a UPF 20 is to be transmitted. The copy for UE 30 is provided in a manner of corresponding to one or a plurality of downlink UPFs.

Here, as described above, in the private network according to the present embodiment, the UPFs 10 5 and 10_6 (downlink UPFs) to each of which the UE that receives the multicast packet belongs are arranged in a limited manner. Thus, an entity (copy for UE 30) for determining to which piece of UE the multicast packet output from the copy for a UPF 20 is to be transmitted may be arranged in the vicinity of the downlink UPF. Thus, the number of installed Copies for UE 30 can be controlled to the minimum necessary.

The copy for UE 30 converts the multicast packet output from the copy for a UPF 20 into a unicast packet addressed to UE that belongs to the downlink UPF and that receives the multicast packet. The copy for UE 30 converts the multicast packet into the unicast packet by assigning an IP address of the UE as a destination address of the multicast packet. Note that in a case where there is a plurality of pieces of UE that belongs to the downlink UPF, the copy for UE 30 reproduces the multicast packet for each of the plurality of pieces of UE and performs conversion thereof into the unicast packet. The copy for UE 30 transmits the converted unicast packet to the UE via the downlink UPF.

Note that although a case where one copy for UE 30 is provided for one downlink UPF is illustrated in FIG. 6, the copy for UE 30 may be provided for every plurality of downlink UPFs. The copy for UE 30 is arranged in a manner of corresponding to the one or plurality of downlink UPFs.

Here, the copy for a UPF 20 reproduces the multicast packets according to the number of copies for UE 30. As described above, in the private network according to the present embodiment, the downlink UPF is arranged in the limited manner, whereby an increase in the number of installed Copies for UE 30 can be controlled. That is, the number of reproductions of the multicast packet by the copy for a UPF 20 can be controlled, and a processing load of the copy for a UPF 20 can be reduced.

Note that the above-described uplink UPF and downlink UPF are desirably different UPFs 10. The downlink UPF is full of traffic of the reproduced multicast packets addressed to a plurality of pieces of UE. Since an uplink multicast packet is copied and received by many pieces of UE, there is a large influence when a packet loss is generated in the uplink multicast due to traffic congestion. Thus, it is desirable that the uplink UPF and the downlink UPF are different UPFs 10. Specifically, when the core network is small and a processing amount of each UPF is small, the uplink UPF and the downlink UPF are preferably different UPFs 10.

### <3.2. Copy for a UPF>

FIG. 7 is a view illustrating a configuration example of a relay device that functions as the copy for a UPF according to the first embodiment. The copy for a UPF 20 copies the multicast packet received from the uplink UPF and relays the multicast packet to the copy for UE 30. Hereinafter, the relay device that functions as the copy for a UPF 20 is also simply referred to as the copy for a UPF 20.

The copy for a UPF 20 includes a communication unit 21, a storage unit 22, and a control unit 23. Note that the configuration illustrated in FIG. 7 is a functional configuration, and a hardware configuration may be different therefrom. Furthermore, the function of the copy for a UPF 20 may be implemented in a manner of being distributed in a plurality of physically separated configurations. For example, the copy for a UPF 20 may include a plurality of server devices.

The communication unit 21 is a communication interface for communicating with other devices. The communication unit 21 may be a network interface or a device connection interface. For example, the communication unit 21 may be a local area network (LAN) interface such as a network interface card (NIC), or may be a USB interface including a universal serial bus (USB) host controller, a USB port, and the like. Furthermore, the communication unit 21 may be a wired interface or a wireless interface. The communication unit 21 functions as a communication means of the copy for a UPF 20. The communication unit 21 can communicate with a plurality of core networks provided in the cellular network 1.

The storage unit 22 is a data readable/writable storage device such as a dynamic random access memory (DRAM), a static random access memory (SRAM), a flash memory, or a hard disk. The storage unit 22 functions as a storage means of the copy for a UPF 20. The storage unit 22 stores various programs. Furthermore, the storage unit 22 stores various kinds of data.

The control unit 23 is a controller that controls each unit of the copy for a UPF 20. The control unit 23 is realized by, for example, a processor such as a central processing unit (CPU) or a micro processing unit (MPU). For example, the control unit 23 is realized when the processor executes various programs stored in the storage device inside the copy for a UPF 20 by using a random access memory (RAM) or the like as a work area. Note that the control unit 23 may be realized by an integrated circuit such as an application specific integrated circuit (ASIC) or a field programmable gate array (FPGA). Each of the CPU, MPU, ASIC, and FPGA can be regarded as a controller.

The control unit 23 includes a reproduction unit 231 and a setting unit 232. Each of blocks (reproduction unit 231 and setting unit 232) included in the control unit 23 is a functional block indicating a function of the control unit 23. These functional blocks may be software blocks or hardware blocks. For example, each of the above-described functional blocks may be one software module realized by software (including a microprogram), or may be one circuit block on a semiconductor chip (die).
Obviously, each of the functional blocks may be one processor or one integrated circuit. A configuration method of the functional blocks is arbitrary. Note that the control unit 23 may be configured in units of functions different from the above-described functional blocks.

The reproduction unit 231 reproduces a multicast packet received from the uplink UPF via the communication unit 21 and generates a plurality of the multicast packets. The reproduction unit 231 reproduces the same number of multicast packets as the number of downlink UPFs to which the multicast packets are transmitted.

The setting unit 232 sets a transmission destination of the multicast packet reproduced by the reproduction unit 231. As described above, the setting unit 232 sets the copy for UE 30 as the transmission destination of the multicast packet by designating the IP address of the copy for UE 30 in the routing table, for example.

The control unit 23 transmits, via the communication unit 21, the multicast packet reproduced by the reproduction unit 231 to the transmission destination set by the setting unit 232.

### <3.3. Copy for UE>

FIG. 8 is a view illustrating a configuration example of a relay device that functions as the copy for UE 30 according to the first embodiment. The copy for UE 30 copies the multicast packet received from the copy for UE 30 and relays the multicast packet to the UE via the downlink UPF. Hereinafter, the relay device that functions as the copy for UE 30 is also simply referred to as the copy for UE 30.

The copy for UE 30 includes a communication unit 31, a storage unit 32, and a control unit 33. Note that the configuration illustrated in FIG. 8 is a functional configuration, and a hardware configuration may be different therefrom. Furthermore, the function of the copy for UE 30 may be implemented in a manner of being distributed in a plurality of physically separated configurations. For example, the copy for UE 30 may include a plurality of server devices.

The communication unit 31 is a communication interface for communicating with other devices. The communication unit 31 may be a network interface or a device connection interface. For example, the communication unit 31 may be a local area network (LAN) interface such as a network interface card (NIC), or may be a USB interface including a universal serial bus (USB) host controller, a USB port, and the like. Furthermore, the communication unit 31 may be a wired interface or a wireless interface. The communication unit 31 functions as a communication means of the copy for UE 30. The communication unit 31 can communicate with the plurality of core networks provided in the cellular network 1.

The storage unit 32 is a data readable/writable storage device such as a dynamic random access memory (DRAM), a static random access memory (SRAM), a flash memory, or a hard disk. The storage unit 32 functions as a storage means of the copy for UE 30. The storage unit 32 stores various programs. Furthermore, the storage unit 32 stores various kinds of data.

The control unit 33 is a controller that controls each unit of the copy for UE 30. The control unit 33 is realized by, for example, a processor such as a central processing unit (CPU) or a micro processing unit (MPU).
For example, the control unit 33 is realized when the processor executes various programs stored in the storage device inside the copy for UE 30 by using a random access memory (RAM) or the like as a work area. Note that the control unit 33 may be realized by an integrated circuit such as an application specific integrated circuit (ASIC) or a field programmable gate array (FPGA). Each of the CPU, MPU, ASIC, and FPGA can be regarded as a controller.

The control unit 33 includes a reproduction unit 331, a setting unit 332, and a transmission unit 333. Each of the blocks (reproduction unit 331, setting unit 332, and transmission unit 333) included in the control unit 33 is a functional block indicating a function of the control unit 33. These functional blocks may be software blocks or hardware blocks. For example, each of the above-described functional blocks may be one software module realized by software (including a microprogram), or may be one circuit block on a semiconductor chip (die). Obviously, each of the functional blocks may be one processor or one integrated circuit. A configuration method of the functional blocks is arbitrary. Note that the control unit 33 may be configured in units of functions different from the above-described functional blocks.

The reproduction unit 331 reproduces a multicast packet received from the copy for UPF 20 via the communication unit 21 and generates a plurality of the multicast packets. The reproduction unit 331 reproduces the same number of multicast packets as the number of pieces of UE to which the multicast packets are transmitted.

The setting unit 332 sets a transmission destination of the multicast packet reproduced by the reproduction unit 331. For example, the setting unit 332 sets, as the transmission destination of the multicast packet, UE from which an IP address has been acquired among pieces of UE associated with the downlink UPF. Note that the UE attached to the cellular network 1 has acquired the IP address.

Specifically, by rewriting the IP address of the UE as a destination address of the multicast packet reproduced by the reproduction unit 331, the setting unit 332 sets the UE, the IP address of which has been already acquired, as the transmission destination of the multicast packet. In such a manner, it can also be said that the packet for which the destination is set by the setting unit 332 is a unicast packet addressed to the UE. As described above, the setting unit 332 is a conversion unit that converts the multicast packet into the unicast packet addressed to the UE.

The transmission unit 333 transmits the unicast packet converted by the setting unit 332 to the downlink UPF via the communication unit 31. As a result, the unicast packet is put into a GTP tunnel of the corresponding UE in the downlink UPF and is transmitted to the UE via the base station.

### <3.4. Example of a multicast>

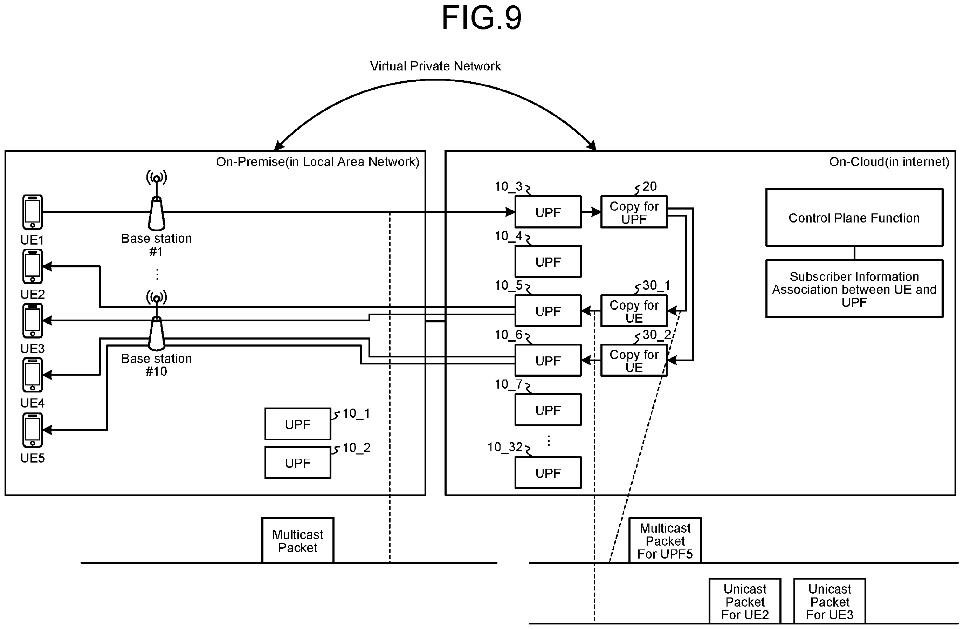

An example of the multicast performed in the private network according to the first embodiment will be described with reference to FIG. 9. FIG. 9 is a view for describing an example of the multicast performed in the private network according to the first embodiment.

As illustrated in FIG. 9, UE 1 transmits the multicast packet in the uplink. The multicast packet transmitted by the UE 1 is transmitted to the UPF 10_3 that is the uplink UPF via a base station #1. The copy for a UPF 20 provided in the subsequent stage of the UPF 10_3 reproduces the multicast packet received by the UPF 10_3 and performs transmission thereof to the UPFs 10_5 and 10_6 that are downlink UPFs. More specifically, the copy for a UPF 20 transmits the multicast packets to the Copies for UE 30_1 and 30_2 respectively corresponding to the UPFs 10_5 and 10_6.

In the example of FIG. 9, the copy for UE 30_1 reproduces the multicast packet. The copy for UE 30_1 converts the reproduced multicast packets into unicast packets addressed to UE 2 and UE 3 associated with the UPF 10_5. The copy for UE 30_1 transmits the converted unicast packets to the UPF 10_5. As a result, the unicast packets are put into GTP tunnels corresponding to the UE 2 and the UE 3 by the UPF 10_5, and are transmitted to the UE 2 and the UE 3 via a base station #10.

Although not illustrated, the copy for UE 30_2 similarly converts the multicast packets into unicast packets addressed to UE 4 and UE 5 associated with the UPF 10_6. The copy for UE 30_2 transmits the converted unicast packets to the UPF 10_6. As a result, the unicast packets are put into GTP tunnels corresponding to the UE 4 and the UE 5 by the UPF 10_6, and are transmitted to the UE 4 and the UE 5 via the base station #10.

As a result, the UE 2 to UE 5 can receive packets having the same contents as the multicast packet transmitted by the UE 1.

Note that the UE 1 that transmits the multicast packet is designated to use the UPF 10_3, which is the uplink UPF, in the subscriber file (subscriber information) (association between UE and UPF). In addition, the UE 2 and UE 3 that receive the multicast packets are designated to use the UPF 10_5, which is the downlink UPF, in the subscriber file. The UE 4 and UE 5 that receive the multicast packets are designated to use UPF 10_6, which is the downlink UPF, in the subscriber file.

As described above, the UPF 10_3 that processes the uplink of the multicast packet and the UPF 10_5 and 10_6 that process the downlink thereof are different UPFs 10. As described, by limiting the UPF 10 that processes the uplink of the multicast packet, it is possible to set the number of the Copies for a UPF 20 to one in the private network illustrated in FIG. 9. Furthermore, by limiting the UPF that processes the downlink of the multicast packet, it is possible to set the number of the Copies for UE 30 to two in the private network illustrated in FIG. 9.

Furthermore, the copy for a UPF 20 does not need to be aware of which piece of UE desires to receive the multicast packet, and only needs to transfer the multicast packet to 10_5 and 10_6 designated in advance. Thus, in the private network according to the first embodiment, the processing load of the copy for a UPF 20 can be reduced.

As described above, in the private network according to the first embodiment, by limiting the UPF 10 that processes the multicast packet, it is possible to realize the multicast without increasing a processing capacity of the UPF 10. Furthermore, the number of relay devices (copy for a UPF 20 and copy for UE 30) arranged in the private network can be further reduced, an increase in a scale of the private network can be controlled, and an increase in a cost of constructing the private network can be controlled.

Here, as described above, in the multicast, a plurality of channels (programs and sessions) may be simultaneously used. In this case, the copy for a UPF 20 determines, for each channel, to which downlink UPF the multicast packet is copied and transferred. Thus, the copy for a UPF 20 stores a correspondence relationship between the channels and the downlink UPFs, to which the multicast packets are transferred, as illustrated in Table 2. This correspondence relationship is stored in the storage unit 22 of the copy for a UPF 20, for example.

**Table 2**

| Multicast Channel ID | Used Downlink UPF ID |
|---|---|
| 1 | 5 |
| 2 | 5 |
| 3 | 6 |
| 4 | 5, 6 |
| 5 | 5, 6 |

In the example of Table 2, the copy for a UPF 20 stores multicast channel IDs and used downlink UPF IDs in association with each other. The multicast channel IDs are pieces of information that identify the channels of the multicast, and the downlink UPF IDs are pieces of information that identify the downlink UPFs. For example, the downlink UPF IDs illustrated in Table 2 correspond to numbers at the ends of the UPFs 10_1 to 10_32 illustrated in FIG. 7.

In Table 2, for example, a channel with the multicast channel ID being "1" corresponds to the UPF 10_5. In addition, a channel with the multicast channel ID being "3" corresponds to the UPF 10_6. A channel with the multicast channel ID being "4" corresponds to the UPFs 10_5 and 10_6.

For example, in a case of receiving a multicast packet with the multicast channel ID being "1", the copy for a UPF 20 transfers the received multicast packet to the UPF 10_5. For example, in a case of receiving a multicast packet with the multicast channel ID being "3", the copy for a UPF 20 transfers the received multicast packet to the UPF 10_6. For example, in a case of receiving the multicast packet with the multicast channel ID being "4", the copy for a UPF 20 reproduces the received multicast packet, and performs the transfer to the UPFs 10_5 and 10_6.

In the first embodiment, by limiting the UPF, to which the UE that transmits the multicast packet belongs, to the uplink UPF, it is possible to reduce the number of Copies for a UPF 20 that determine a transfer destination of the multicast packet output from the uplink UPF.

In addition, by limiting the UPF 10, to which the UE that receives the multicast packet belongs, to the downlink UPF, it is possible to reduce the number of reproductions of the multicast packet, the reproduction being performed by the copy for a UPF 20.

In addition, by separating the uplink UPF that transmits the multicast packet and the downlink UPF that receives the multicast packet, it is possible to control deterioration in quality of the multicast packet.

### <<4. Second embodiment>>

Although it has been described in the first embodiment that the plurality of pieces of UE simultaneously receives the multicast packets, this is not a limitation. For example, priority may be given to a plurality of pieces of UE, and the plurality of pieces of UE may receive a multicast packet in order corresponding to the priority. As described above, a case where priority is given to the plurality of pieces of UE will be described in the second embodiment.

There is a case where a multicast packet is control information for controlling a plurality of devices (UE) and the same control information is transmitted to the plurality of devices by a multicast. In this case, the plurality of devices has different importance, and there is a demand for preferentially transmitting the control information to a device having higher importance.

As described above, the private network includes a plurality of downlink UPFs. Thus, in the second embodiment, for example, a resource management function sets priority for transmitting a multicast packet to the downlink UPFs. Then, UE with high priority is associated with a downlink UPF with high priority, and UE with low priority is associated with a downlink UPF with low priority.

For example, it is assumed that the number of pieces of UE having the high priority is small and the number of pieces of UE having the low priority is large. In addition, for example, it is assumed that a UPF 10_5 is a downlink UPF with high priority and a UPF 10_6 is a downlink UPF with low priority. In this case, a small number of pieces of UE having high priority are subordinate to the UPF 10_5, and a large number of pieces of UE having low priority are subordinate to the UPF 10_6. Then, by transmitting the multicast packet by the UPF 10_5 in preference to the UPF 10_6, it is possible to realize the multicast in which the priority is given.

For example, in addition to the control information of the devices, a use case in which video data captured by a camera is checked in real time during shooting of a movie is considered. In this case, for example, it is desired that video data that is a multicast packet is more reliably transmitted a movie director than other staffs. In this case, priority of UE used by the movie director may be set high, and priority of UE used by the other staffs may be set low.

Furthermore, a use case of multicasting a state of a game in a stadium to spectators in the stadium is also conceivable. For example, there is a case where a goal scene of the game is multicast-delivered to the spectators in the stadium. In this case, for example, a priority of the multicast may be set according to types of tickets of the spectators. For example, UE of a spectator whose ticket is expensive is set to have high priority of the multicast, and UE of a spectator whose ticket is inexpensive is set to have low priority of the multicast.

At this time, for example, the number of pieces of UE that belong to the downlink UPF with high priority is set to be small, and the number of pieces of UE that belong to the downlink UPF with low priority is set to be large. Note that UE that belongs to the downlink UPF with the high priority is UE for which the priority of the multicast is set to be high, and UE that belongs to the downlink UPF with the low priority is UE for which the priority of the multicast is set to be low.

When the number of pieces of UE that belong to the downlink UPF is large, the number of reproductions of the multicast packet becomes large, and a processing load of the downlink UPF increases, whereby the throughput of the downlink UPF decreases. In the downlink UPF with the high priority, since the number of pieces of UE that belong thereto is set to be small, a decrease in the throughput can be controlled, and a packet can be more promptly transmitted to the UE set to have the high priority.

Note that although a case where the priority is given to each of the downlink UPFs has been described herein, the priority can be set depending on to which piece of UE a packet is transmitted first, for example, in one downlink UPF. For example, in a case where tens of thousands of pieces of UE are associated with one downlink UPF, there is a possibility that a large difference is generated in time until packets reach the pieces of UE depending on transmission order of the packets even when the pieces of UE are associated with the same downlink UPF. Thus, even in the one downlink UPF, by setting the priority for each piece of UE, it is possible to preferentially transmit a packet to important UE that has an expensive ticket type, for example. Note that the transmission order in the downlink UPF has a correspondence relationship with generation order of packets in a copy for UE 30 that transmits the packets to the downlink UPF.

Table 3 is a table illustrating a correspondence relationship between pieces of UE and priority of a case where the priority is set for each piece of the UE in the one downlink UPF. The correspondence relationship illustrated in Table 3 is held by, for example, the copy for UE 30, and the copy for UE 30 generates packets in order corresponding to the priority of the pieces of UE.

**Table 3**

| UE ID | Priority in Copy for UE |
|---|---|
| 1 | High |
| 2 | Low |
| 3 | Low |
| 4 | Low |
| 5 | High |
| 6 | Low |
| 7 | High |
| ⋮ | |
| 128 | Low |

For example, as illustrated in Table 3, the copy for UE 30 holds UE IDs and the priority in the copy for UE 30 in association with each other. The UE IDs are pieces of information that identify the pieces of UE. The priority in the copy for UE 30 is information indicating the generation order of the packets, and is classified into two types that are "High" and "Low" in Table 3. Note that although the number of pieces of the UE associated with the one copy for UE 30 (downlink UPF) is 128 in Table 3, this is an example, and the number of pieces of the UE associated with the one copy for UE 30 (downlink UPF) may be more or less than 128.

Note that although the number of pieces of the UE associated with the downlink UPF is changed according to the priority of the downlink UPF in the above-described example, the present invention is not limited thereto. For example, order of multicast packets generated and transmitted by the copy for a UPF 20 may be changed according to the priority of the downlink UPF. For example, the copy for a UPF 20 reproduces and transmits the multicast packet in order from the downlink UPF with the high priority.

In this case, the copy for a UPF 20 holds the downlink UPFs and the priority in association with each other. Table 4 is a table illustrating a correspondence relationship between the downlink UPFs and the priority. The correspondence relationship illustrated in Table 4 is held by, for example, the copy for a UPF 20.

**Table 4**

| UPF ID | priority in UPF |
|---|---|
| 1 | - |
| 2 | - |
| 3 | - |
| 4 | - |
| 5 | High |
| 6 | Low |
| 7 | - |
| | |
| 32 | - |

For example, as illustrated in Table 4, the copy for a UPF 20 holds UPF IDs and the priority in the UPFs 10 in association with each other. The UPF IDs are pieces of information that identify the UPFs 10. The priority in the UPFs 10 is priority at which the copy for a UPF 20 transmits the multicast packets. The priority in the UPFs 10 is set for the downlink UPFs. In Table 4, priority of the UPF 10_5 is "High", and priority of the UPF 10_6 is "Low". Thus, the copy for a UPF 20 reproduces and transmits a multicast packet addressed to the UPF 10_5 with the priority over the UPF 10_6.

There are the following three methods for setting the priority described above.
(1) Priority is set by variation of the number of pieces of UE allocated to the downlink UPF for the multicast.
   For example, when the number of pieces of UE allocated to a downlink UPF for the multicast is small, priority of the pieces of UE allocated to the downlink UPF is set to be high. For example, one piece of UE with high priority uses one downlink UPF, and 10 pieces of UE with low priority use one downlink UPF. As a result, the UE with the high priority can receive a packet in preference to the UE with the low priority.
(2) The copy for UE 30 first copies and transmits a multicast packet for UE having high priority, whereby priority is set.
(3) The copy for a UPF first copies and transmits a multicast packet for a UPF having high priority, whereby priority is set.

Note that it is possible to protect important multicast contents by separating an uplink UPF and a downlink UPF in addition to the above. For example, it is assumed that a contents provider (see UE 1 in FIG. 7) uploads multicast contents (multicast packet) to a network by using the uplink UPF (see UPF 10_3 in FIG. 7). In this case, as described above, downlink traffic for the multicast is prevented from passing through the uplink UPF. Thus, the important multicast contents are protected.

Note that the multicast of the private network according to the technology of the present disclosure can be referred to as a semi-multicast. Thus, the above-described multicast with the priority is effective.

### <<5. Third embodiment>>

Although the UE 1 uploads a multicast packet in the first and second embodiments, this is not a limitation. For example, a multicast contents center may be provided in a private cellular network, and the center may transmit a multicast packet. Such a case will be described as the third embodiment.

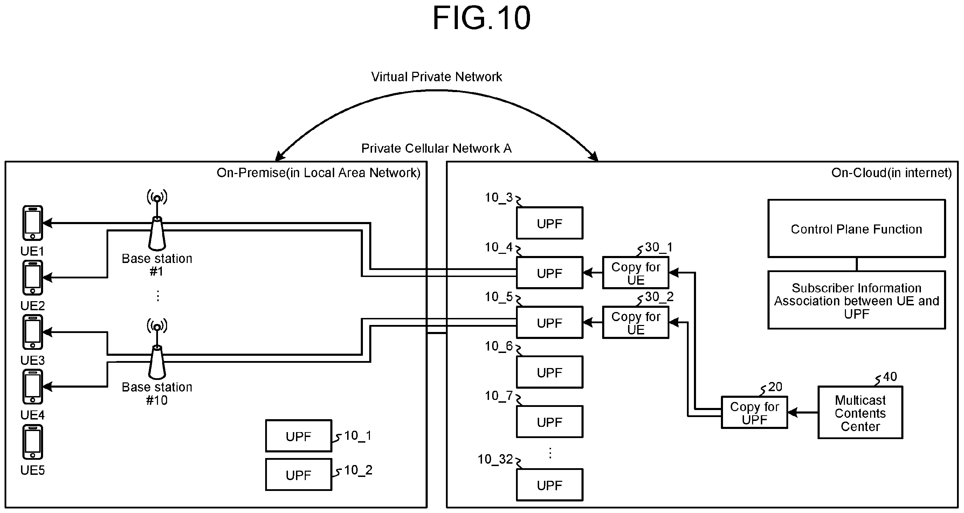

FIG. 10 is a view illustrating an example of a private network according to the third embodiment of the present disclosure. The private network illustrated in FIG. 10 has the same configuration as the private network illustrated in FIG. 7 except for a point that a multicast contents center 40 is included.

As illustrated in FIG. 10, the multicast contents center 40 generates a multicast packet and performs transmission thereof to a copy for a UPF 20. The copy for a UPF 20 according to the present embodiment can be arranged not in the vicinity of an uplink UPF but in the vicinity of the multicast contents center 40. The copy for a UPF 20 transfers the received multicast packet to a downlink UPF.

As described above, the copy for a UPF 20 may receive the multicast packet from the multicast contents center 40.

Note that although it has been described herein that the multicast contents center 40 generates the multicast packet, this is not a limitation. The multicast contents center 40 may receive a multicast packet from the uplink UPF, for example. That is, in FIG. 7, the multicast contents center 40 may be provided between the uplink UPF (UPF 10_3) and the copy for a UPF 20.

### <<6. Fourth embodiment>>

Although the copy for a UPF 20 determines whether an IP packet is a multicast packet according to whether a destination IP address of the IP packet is a specific IP address representing a multicast channel in the first embodiment described above, this is not a limitation.

For example, in this method, it is assumed that all routers (not illustrated) that may be present in multiple stages between the copy for a UPF 20 and the copy for UE 30 understand the specific IP address representing the multicast channel. On the other hand, in a case where the routers do not understand the specific IP address, the multicast packet is transferred from the copy for a UPF 20 to the copy for UE 30 by utilization of another method.

As an example of another method, for example, a method in which a copy for a UPF 20 overwrites a destination IP address of a multicast packet with an IP address of a copy for UE 30 is considered.

The copy for a UPF 20 identifies a multicast channel from a UE-specific source IP address and a port number. The copy for a UPF 20 copies the multicast packet according to the number of corresponding downlink UPFs, and overwrites the destination IP addresses of the copied multicast packets with the IP address of the copy for UE 30 in a preceding stage of the downlink UPFs.

The copy for UE 30 identifies the multicast channel from the source IP address and the port number of the received packet. The copy for UE 30 copies the multicast packet according to the number of pieces of UE that receive the packet, overwrites the destination IP addresses of the copied packets with the IP addresses of the pieces of UE, and performs transmission thereof.

As a result, even when there is a router that does not support the multicast between the copy for a UPF 20 and the copy for UE 30, the multicast packet can be routed from the copy for a UPF 20 to the copy for UE 30.

### <<7. Fifth Embodiment>>

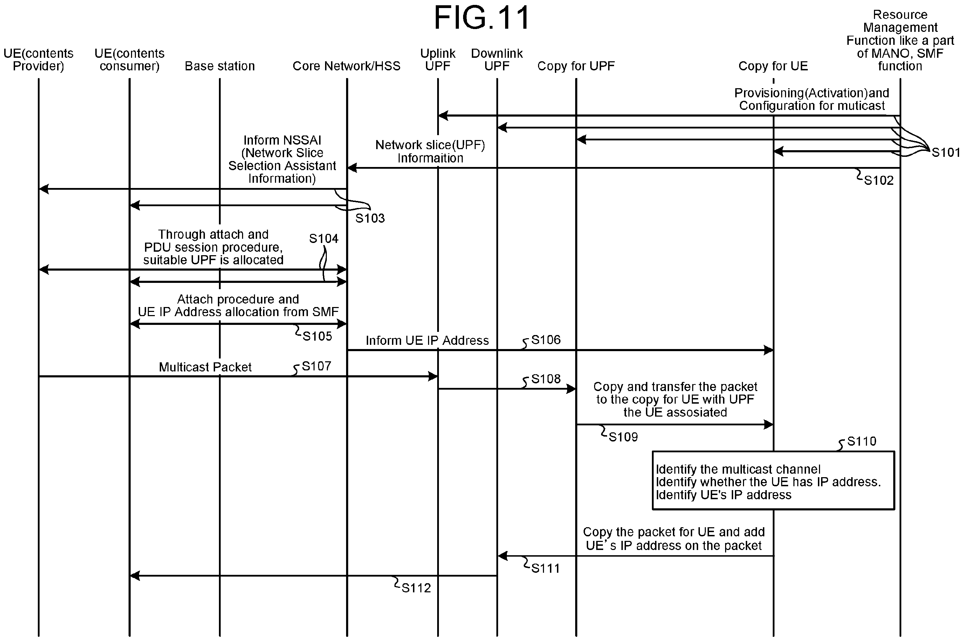

In the fifth embodiment, a case where the above-described multicast is performed as a 3GPP standard will be described as an example. FIG. 11 is a sequence diagram illustrating a flow of multicast processing according to the fifth embodiment of the present disclosure.

In the example described above, it has been described that the resource management function arranges the UPFs 10 for the multicast (uplink UPF and downlink UPF). In the 3GPP, a resource management function may be referred to as management and orchestration (MANO) (see TS28.531). Since a UPF 10 can be regarded as a network slice, arranging of a UPF 10 for a multicast can be expressed as provisioning of the UPF 10 for the multicast by the MANO.

As illustrated in FIG. 11, with respect to a plurality of UPFs, the resource management function performs provisioning and configuration of the UPFs 10 for the multicast (Step S101). In an example of FIG. 11, the provisioning and configuration for the multicast are performed on a copy for a UPF 20 and a copy for UE 30 in addition to the plurality of UPFs (uplink UPF and downlink UPF) .

Information of the UPFs 10 on which the provisioning is performed is transmitted from the resource management function to a Core Network/HSS as information related to the network slices (Step S102) .

The Core Network/HSS transmits the information of the UPFs 10, on which the provisioning is performed, as network slice selection assistance information (NSSAI) to UE via a base station (Step S103). Although eMBB and URLLC are conventionally transmitted as the NSSAI to the UE, the information of the UPFs 10 on which the provisioning is performed is transmitted herein to the UE as a network slice for the multicast in the NSSAI. Note that the UE includes a contents provider that uploads a multicast packet and a contents consumer that receives the multicast packet.

On the basis of the NSSAI, the UE acquires information of the UPF 10 used for an uplink of the multicast. The UE performs a procedure for starting communication on the basis of the acquired information (Step S104). At this time, the UE designates a desired network slice in a Session request message that is the procedure for starting the communication. In the present embodiment, from the information acquired on the basis of the NSSAI, the UE designates the UPF 10 for the multicast as a desired network slice. The session management function (SMF) (see TS23.501) allocates a network slice (here, a UPF 10) to the UE according to the UPF 10 designated by the UE.

The UE executes an ATTACH procedure with the Core Network/HSS, and an IP address is allocated from the SMF (Step S105). Information of the IP address of the UE is informed from the Core Network/HSS to the copy for UE 30 (Step S106).

The UE that is a contents provider uploads a multicast packet to the uplink UPF (Step S107). The uplink UPF transmits the multicast packet to the copy for a UPF 20 (Step S108). The copy for a UPF 20 reproduces the multicast packet and performs a transfer to the copy for UE 30 (Step S109).

On the basis of the received multicast packet, the copy for UE 30 identifies a multicast channel, identifies whether the UE has acquired an IP address, and identifies the IP address of the UE (Step S110).

The copy for UE 30 reproduces the multicast packet, adds the IP address of the UE, and performs transmission thereof to the UE, which is the contents consumer, via the downlink UPF (Step Sill and S112).

Here, although an entity that arranges the UPF 10 for the multicast may be the MANO or the SMF, the resource management function performs provisioning of the UPF 10 that is a type of the network slice, and the resource management function also makes correspondence between the UE and the UPF 10 in the present embodiment. That is, it can be said that the resource management function according to the present embodiment is a function that plays roles of both the MANO and the SMF. Thus, in the present embodiment, the entity that arranges the UPF 10 for the multicast can be said as the resource management function having the functions of both the MANO and SMF.

The resource management function performs the provisioning of the UPF 10 as a function like the MANO. In addition, the resource management function performs the provisioning of the copy for a UPF and the copy for UE in or in the vicinity of the UPF 10 related to the multicast. Here, the provisioning is to perform arrangement and activation.

Furthermore, as described above, the UPF 10 can be said as the network slice. Thus, the resource management function provides information to the core network to inform the UE that there is the network slice related to the multicast.

The core network informs the UE of the NSSAI as information for selecting the network slice. In the procedure of performing attaching and establishing a PDU session, since the UE itself desires to perform contents uploading of the multicast, the UE may desire connection to a network slice that enables the above, that is, the UPF 10 responsible for an uplink of the multicast. The SMF allocates the UPF 10 to the UE on the basis of the desire.

In a case of 5G, when the terminal is attached, the SMF allocates an IP address to the UE. The copy for UE 30 prepares a packet for each piece of UE and assigns an IP address of the UE to the packet. In such manner, the IP address of the UE is used for processing in the copy for UE 30. Thus, the copy for UE 30 acquires the IP address of the UE by inquiring the SMF about the IP address of the UE. In 4G, the copy for UE 30 acquires the IP address of the UE by another method (details will be described later.).

As described above, the copy for a UPF 20 determines whether the multicast packet transmitted by the UE, which is the contents provider, is a multicast packet. The copy for a UPF 20 transfers a copy of the multicast packet to the copy for UE 30. Note that the copy for UE 30 is arranged in or in the vicinity of the UPF 10 (downlink UPF) that performs a multicast downlink.

At this time, the copy for UE 30 may leave a destination IP address as an IP address dedicated for the multicast, or may perform rewriting with an IP address of the copy for UE 30 at this point. For example, in a case where a router included in a core network corresponds to the multicast packet, the copy for UE 30 may perform transfer with the destination IP address representing the multicast packet as it is. In this case, the router included in the core network automatically transmits the multicast packet to the copy for UE 30.

The copy for UE 30 identifies a channel of the arriving multicast packet, and determines whether the corresponding UE has acquired the IP address, and determines what is the IP address at that time. The copy for UE 30 copies a packet for each piece of the UE, performs overwriting with the IP address of the UE on the packet, and performs transmission thereof. The packet passing through the UPF 10 of the downlink is delivered to the UE that is a Contents consumer.

### <<8. Sixth embodiment>>

As described above, the UPF 10 may be arranged in on-premise or may be arranged in a cloud. In the cloud, the number of UPFs 10 can be easily increased or decreased. This is because computer resources are treated as virtual machines in the cloud.

On the other hand, in the on-premise, a UPF 10 is arranged on the same local area network (LAN) as UE. Thus, the UPF 10 has an advantage that a delay in communication with an Application Server in the vicinity of the UPF 10 can be made small. In such a manner, there are advantages in both arranging the UPF 10 in the on-premise and arranging the UPF 10 on the cloud, respectively.

Thus, in the sixth embodiment, a method of selectively using a case where a multicast service is provided by a UPF 10 that belongs to on-premise and a case where the multicast service is provided by a UPF 10 that belongs to a cloud will be described.

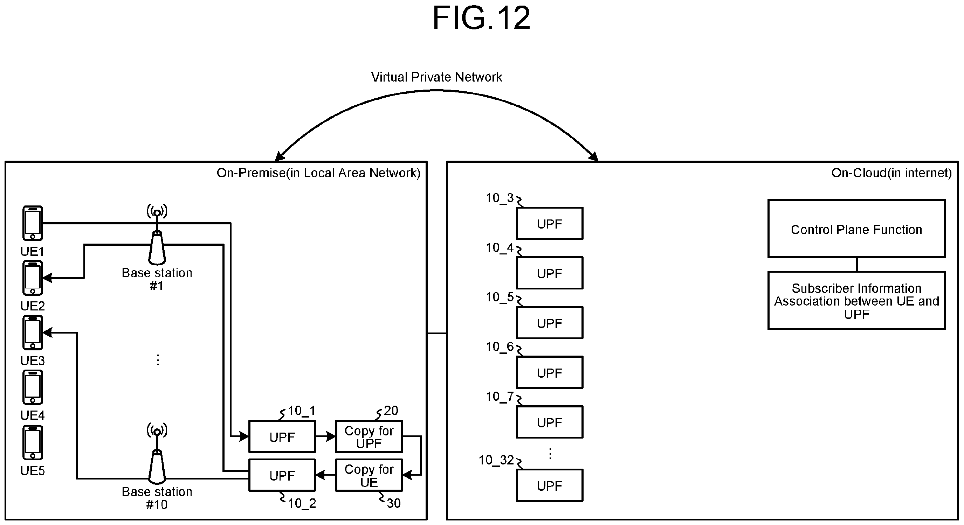

FIG. 12 is a view illustrating an example of a multicast service according to the sixth embodiment of the present disclosure. FIG. 12 is a view illustrating a case where the multicast service is provided by the UPF 10 that belongs to the on-premise.

As illustrated in FIG. 12, in a case where all UE 2 and UE 3 that receive the multicast packet are connected to a UPF 10_2 of on-premise (downlink UPF), it is desirable that a UPF 10_1 that provides the multicast packet (uplink UPF) is arranged in the on-premise similarly to the downlink UPF.

This is because it is not desirable in terms of a traffic load and in terms of delay that the multicast packet once passes through the UPF 10 on a cloud side (uplink UPF) and then returns to the UPF 10 in the on-premise (downlink UPF).

The multicast service can be used not only for video broadcasting but also for a case of providing the same control information to a plurality of devices and controlling the devices in cooperation, for example. In the control of the plurality of devices, a delay may become a major problem. Thus, in a case where the multicast packet includes the control information, it is important that the delay is small.

As an advantage of providing the multicast service by the UPF 10 that belongs to the on-premise, there is a little influence of traffic on an Internet side.

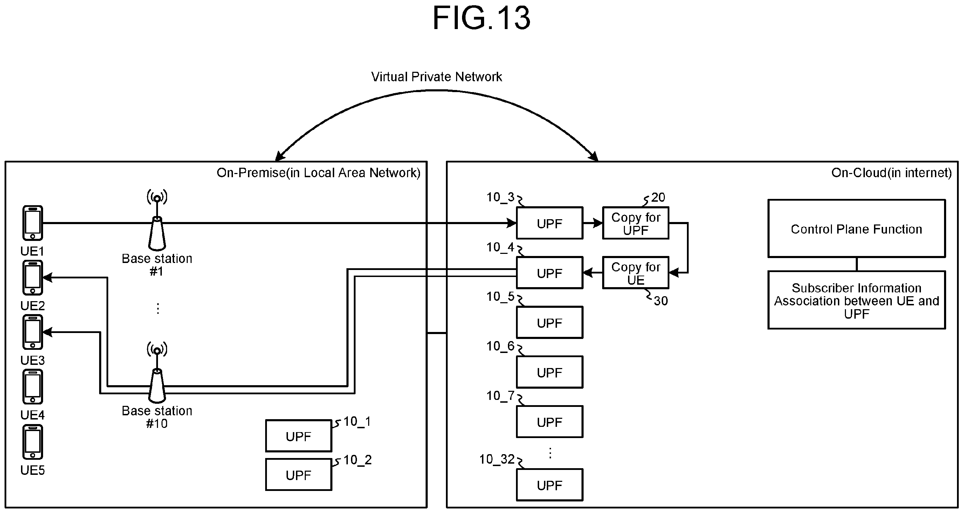

FIG. 13 is a view illustrating an example of the multicast service according to the sixth embodiment of the present disclosure. FIG. 13 is a view illustrating a case where the multicast service is provided by the UPF 10 that belongs to the cloud.

As illustrated in FIG. 13, in a case where all the UE 2 and UE 3 that receive the multicast packet are connected to a UPF 10_4 in the cloud (downlink UPF), it is desirable that a UPF 10_3 that provides the multicast packet (uplink UPF) is arranged in the cloud similarly to the downlink UPF.

In terms of the delay, although the delay may be smaller in a case where the multicast service is provided by the UPF 10 that belongs to the on-premise, the UPF 10 that belongs to the on-premise is desirably used for a service that is a normal unicast communication service and requires a low delay.

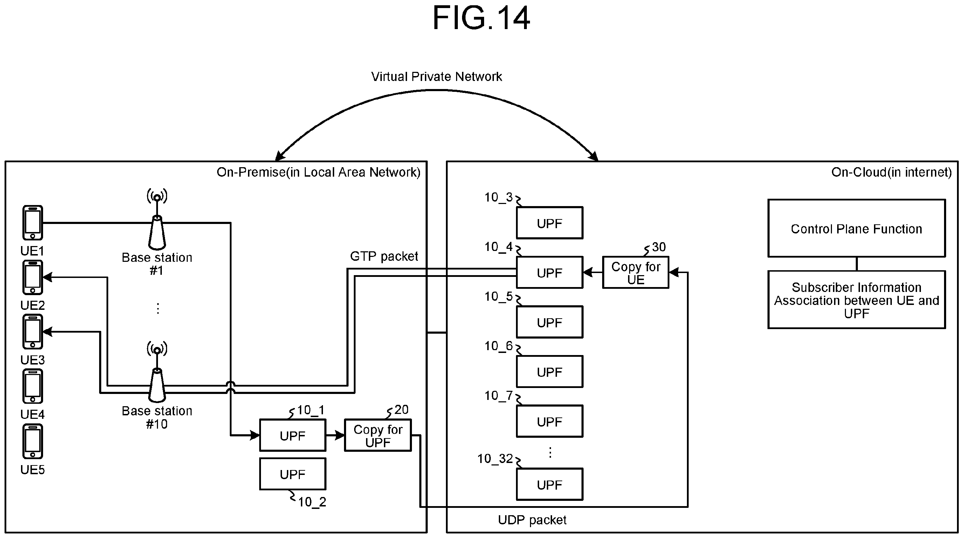

Here, FIG. 14 is a view illustrating an example of the multicast service. FIG. 14 is a view illustrating a case where the multicast service is provided by both the UPF 10 that belongs to the on-premise and the UPF 10 that belongs to the cloud.

As illustrated in FIG. 14, after passing through the UPF 10_1 of the on-premise, the multicast packet becomes a UDP packet (connectionless communication). The UDP packet does not have a retransmission function or a function of informing that the connection is broken.

On the other hand, after the multicast packet passes through the UPF 10_3 in the cloud, the UDP packet is included in a GTP packet (connection communication) and is carried. The GTP packet has a function of retransmission and of detecting connection.

Thus, in a case where the multicast packet passes through a long path from the on-premise side to the cloud side, quality of communication can be maintained when the multicast packet passes through as the GTP packet instead of passing through as the UDP packet. In such a manner, by providing the multicast service by the UPF 10 that belongs to the cloud, it is possible to maintain the quality of communication.

In addition, as illustrated in FIG. 14, when the uplink UPF is arranged in the on-premise, a copy for a UPF 20 corresponding to the uplink UPF is also arranged in the on-premise. The copy for a UPF 20 in FIG. 14 copies the multicast packet according to the number of downlink UPFs and performs transmission thereof to the cloud side. Thus, uplink traffic may increase.

On the other hand, as illustrated in FIG. 13, when the uplink UPF is arranged in the cloud, the copy for a UPF 20 corresponding to the uplink UPF is also arranged in the cloud. The copy for a UPF 20 in FIG. 13 also copies the multicast packet according to the number of downlink UPFs and performs transmission thereof to a copy for UE 30. In FIG. 13, the copy for UE 30 is also arranged in the cloud.

In such a manner, since the copy for UE 30 that transmits the multicast packet and the copy for UE 30 that receives the multicast packet are arranged in the same virtual private network, a communication route through which the multicast packet passes in the cloud is less likely to be long when compared with that in a case of FIG. 13.

Thus, as illustrated in FIG. 13, in a case where the multicast service is provided by the UPF 10 that belongs to the cloud, an influence on a communication path can be made small even when the multicast packet is copied and transmitted and traffic increases.

In such a manner, by providing the multicast service by the UPF 10 that belongs to the on-premise, it is possible to reduce the delay of the multicast service.

In addition, by providing the multicast service by the UPF 10 that belongs to the cloud, it is possible to control an increase in traffic in a communication path of an Internet service provider (ISP). In addition, it is possible to prevent a fragile UDP packet from passing through a long communication route.

Note that, for example, it is assumed that the above-described resource management function arranges a UPF 10 used for a multicast in either the on-premise or the cloud according to a condition required for the multicast service (for example, the delay being small).

### <<9. Seventh embodiment>>

Although the multicast service is provided in one private network in each of the above-described embodiments, this is not a limitation. The one private network is, for example, a network configured in one factory, hospital, office, or home. It is also conceivable to provide a multicast packet to a plurality of private networks. In the seventh embodiment, a case where a multicast packet is provided to a plurality of private networks will be described.

For example, in the first embodiment described above, the copy for a UPF 20 transfers a multicast packet to the downlink UPF by using information in which a channel of a multicast channel and the downlink UPF are associated with each other as in Table 2 described above.

However, the information illustrated in Table 2 does not correspond to downlink UPFs of the plurality of private networks, and it is difficult for the copy for a UPF 20 to transfer the multicast packet to the downlink UPFs of the plurality of private networks only with the information illustrated in Table 2.

Here, as described above, in the multicast, there is a plurality of channels (programs and sessions). Thus, a procedure becomes complicated to manage to which private network the transfer is to be performed for each channel, and it is difficult to realize the management in a system such as a private network in which simple operation at a low cost is required.

In a case where the multicast service is provided in one private network as in the first embodiment, as described above, the copy for a UPF 20 in a subsequent stage of the uplink UPF may determine, for each channel, to which UPF a packet is copied and transferred. When the copy for a UPF 20 determines a transfer not only in one private network but also to a UPF 10 of another private network, there is a problem that the setting illustrated in Table 2 becomes complicated.

Thus, in the seventh embodiment of the present disclosure, a dedicated UPF 10 for performing a transfer to another private network is arranged in a private network.

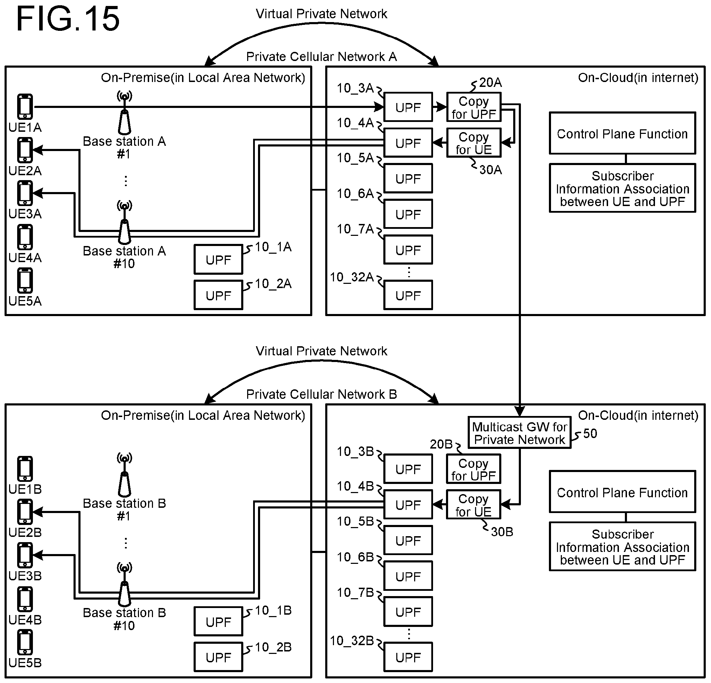

FIG. 15 is a view for describing a multicast according to the seventh embodiment of the present disclosure. As illustrated in FIG. 15, a multicast service according to the present embodiment is provided by a private cellular network A and a private cellular network B. More specifically, a multicast packet uploaded by the private cellular network A is transmitted to UE of the private cellular network A and the private cellular network B.

Note that configurations of the private cellular network A and the private cellular network B are similar to the configuration of FIG. 7 except for a point that the private cellular network B includes a multicast gateway (GW) 50. In FIG. 15, although the multicast GW 50 is arranged in the private cellular network B, the multicast GW 50 may be similarly arranged in the private cellular network A.

The multicast GW 50 is a gateway for receiving the multicast packet in the private network. The private cellular network B informs a private network A in a distribution source of an IP address of the multicast GW 50.

A copy for a UPF 20A arranged in the vicinity of an uplink UPF of the private cellular network A (UPF 10_3A in FIG. 15) holds information as illustrated in Table 5, for example. Table 5 is information indicating a correspondence relationship between multicast channel IDs and used downlink UPF IDs, and is different from Table 2 in a point that the IP address of the multicast gateway (GW) 50 is included as the used downlink UPF ID.

**Table 5**

| Multicast Channel ID | Used Downlink UPF ID |
|---|---|
| 1 | 4 |
| 2 | 4, Multicast Gateway (IP Address = example 100.10.1.5) |
| 3 | Multicast Gateway (IP Address = example 100.10.1.5) |
| 4 | 4 |
| 5 | 4 |

The example in Table 5 indicates that a multicast packet with the multicast channel ID being "1" is transferred to a UPF 10 with the downlink UPF ID being "4". Here, the UPF 10 with the downlink UPF ID being "4" is, for example, a UPF 10_4A of the private cellular network A.

In addition, a downlink UPF ID corresponding to a multicast packet with the multicast channel ID being "2" is "4" and a "Multicast Gateway". In this case, the copy for a UPF 20A transfers the multicast packet to the UPF 10_4A and the multicast gateway (GW) 50 of the private cellular network B. The copy for a UPF 20A transfers the multicast packet to the multicast gateway (GW) 50 by using the IP address of the multicast GW 50 which IP address has been informed in advance. Note that a case where the IP address of the multicast GW 50 is, for example, "100.10.1.5" is illustrated in Table 5.

A downlink UPF ID corresponding to a multicast packet with the multicast channel ID being "3" is the "Multicast Gateway". In this case, the copy for a UPF 20A transfers the multicast packet to a multicast gateway (GW) 50 of the private cellular network B.

In such manner, the multicast gateway (GW) 50 that receives the multicast packet is provided in the private cellular network B. As a result, the copy for a UPF 20A can transfer the multicast packet to the private cellular network B without using the information related to the UPF 10 in the private cellular network B.

Note that the multicast gateway (GW) 50 transfers the received multicast packet to a copy for UE 30B, for example, similarly to the copy for a UPF 20. As a result, even in the private cellular network B, the multicast packet can be transmitted to UE 2B and UE 3B via a downlink UPF (UPF 10_4B in FIG. 15).

In such a manner, since the multicast packet going to the private cellular network B is determined by the copy for a UPF 20A of the private cellular network A, the number of locations where the determination is made can be limited to a small number such as a minimum, for example. Furthermore, the multicast gateway (GW) 50 that receives the multicast packet is provided in the private cellular network B. As a result, the copy for a UPF 20A can transfer the multicast packet to the private cellular network B without copying the multicast packet for each UPF 10B of the other private cellular network B. Thus, provision of the multicast service in the plurality of private cellular networks can be realized by a simple method. As a result, a cost required for providing the multicast service in the plurality of private cellular networks can be further reduced.

Note that a use case in which a very large number of IoT devices included in private cellular networks arranged all over the world are simultaneously controlled by utilization of the same command is conceivable, for example. In order to realize such a use case, it is considered effective to provide the multicast service by the method according to the present embodiment.

### <<10. Eighth embodiment>>

As described above, in each embodiment of the present disclosure, the copy for UE 30 converts the multicast packet into the unicast packet by using the IP address of the UE. As described above, in the technology of the present disclosure, the IP address of the UE is used in the copy for UE 30 prepared in the preceding stage of the downlink UPF.

The copy for UE 30 specifies UE that desires the multicast service from pieces of UE that belong to the downlink UPF, and specifies, out of the above, an IP address of UE that has acquired the IP address. Furthermore, the copy for UE 30 identifies, for each multicast channel, which piece of UE desires to receive the multicast service. In the private network, it is desirable to realize these pieces of processing by the copy for UE 30 at a low cost by a simple method.

In the normal Internet, an IP address of UE can be acquired by utilization of a response from a terminal by a method called a UDP broadcast. However, in the cellular network, since a packet is delivered to UE by a GTP tunnel, an IP address of the UE cannot be acquired by a method similar to that of the Internet.

Here, although the IP address assigned to the UE is held in the subscriber file of the core network by the attach procedure in the cellular network, there is a case where the information cannot be accessed and acquired from the outside.

Thus, in order to perform the multicast by using the technology of the present disclosure, a mechanism of more reliably acquiring the IP address of the UE is required. Specifically, in the technology of the present disclosure, after copying a multicast packet for UE, the copy for UE 30 overwrites a multicast IP address with an IP address of the UE. Thus, a mechanism for more reliably acquiring the IP address of the UE is required.

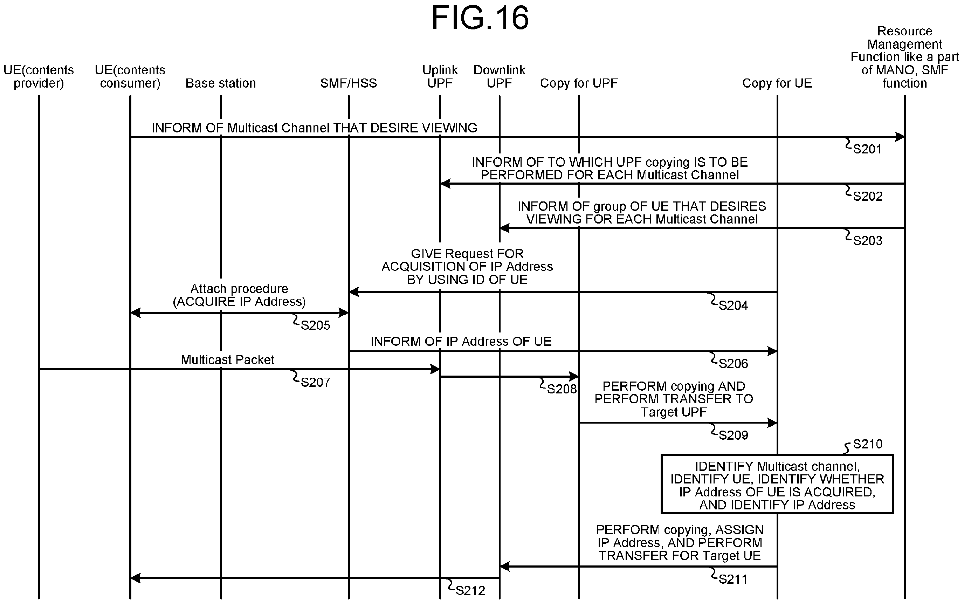

Thus, in the eighth embodiment, a method for acquiring an IP address of UE will be described. FIG. 16 is a sequence diagram illustrating a flow of a multicast according to the eighth embodiment of the present disclosure.

As illustrated in FIG. 16, UE that is a contents consumer informs a resource management function of a multicast channel viewing of which is desired (Step S201). The resource management function informs an uplink UPF of to which downlink UPF a multicast packet is to be copied for each multicast channel (Step S202). In addition, the resource management function informs the downlink UPF of a group of UE that desires viewing for each multicast channel (Step S203).

By using an ID of the UE, the copy for UE 30 makes a ReqUEst on an SMF/HSS for acquisition of an IP address (Step S204). The SMF/HSS acquires the IP address of the UE by an attach procedure (Step S205). The SMF/HSS informs the copy for UE 30 of the acquired IP address of the UE (Step S206).

When a multicast packet is uploaded from UE that is a contents provider to the uplink UPF (Step S207), the uplink UPF transmits the multicast packet to the copy for a UPF 20 (Step S208). The copy for a UPF 20 copies and transfers the multicast packet to a UPF 10 corresponding to a multicast channel of the multicast packet (target UPF 10) (Step S209). More specifically, the copy for a UPF 20 transfers the multicast packet to the target UPF 10 by transferring the multicast packet to the copy for UE 30 arranged in or in the vicinity of the target UPF 10.

On the basis of the received multicast packet, the copy for UE 30 identifies a multicast channel, identifies UE that is a contents consumer, identifies whether an IP address of the identified UE is acquired, and identifies the IP address of the UE (Step S210). On the basis of the processing in Step S210, the copy for UE 30 copies the multicast packet for the UE to which the multicast packet is transmitted (target UE), assigns the IP address, and performs a transfer to the downlink UPF (Step S211). As a result, the packet is transmitted to the UE that is the contents consumer via the downlink UPF (Step S212) .

Here, the processing of Step S210 will be described in more detail.

### Step 1: Identification of a multicast channel

The copy for UE 30 identifies to which multicast channel an arriving multicast packet belongs. Basically, the UPF 10 that can view the multicast channel is determined (see Table 2). However, a plurality of multicast channels may be allocated to one UPF 10. Thus, the copy for UE 30 identifies to which multicast channel the multicast packet belongs from a multicast IP address indicating a multicast channel located at a destination IP address.

### Step 2: Identification of UE

The copy for UE 30 acquires an ID (IMSI or SUPI) of the UE that desires to view the identified multicast channel. Unlike the IGMP of the Internet technology, before the UE acquires an IP address, the copy for UE 30 acquires, from information registered as semi-static information, the information thereof. For example, the copy for UE 30 acquires, for each IMSI (SUPI), information indicating viewing of which multicast channel is desired.

For example, when an upper limit (such as 10) of the number of pieces of UE that view one multicast channel associated with one UPF 10 is set, an upper limit (such as 10) of packet reproductions and copies is determined.
Thus, it is considered that the processing of identifying the UE by the copy for UE 30 is easily implemented.

### Step 3: Whether an IP address of the UE is acquired, and acquisition of the IP address of the UE

From among pieces of UE grasped to be associated with the downlink UPF, the copy for UE 30 checks in advance whether the UE identified to desire viewing of the multicast channel has acquired the IP address.

For example, with reference to a table in which it is grasped how many of the 10 pieces of UE identified in Step 2 have already acquired the IP address, the copy for UE 30 can recognize whether the IP address has already been acquired.

For the UE that has already acquired the IP address, the copy for UE 30 reproduces a packet and then performs processing of overwriting the destination IP address with the IP address of the UE. In order to perform this processing, it is important for the copy for UE 30 to know whether the UE has acquired the IP address. By grasping, for each copy for UE 30, whether the IP address has been acquired, the copy for UE 30 can perform faster processing.

Then, the copy for UE 30 acquires the assigned IP address of the UE in order to use the IP address.

The copy for UE 30 that has acquired the IP address of the UE by executing Step 1 to Step 3 executes processing of Step S211 in FIG. 16. More specifically, the copy for UE 30 prepares packets copied according to the number of pieces of UE having IP addresses, performs overwriting with the IP address of each piece of the UE, and performs transmission thereof.

Hereinafter, a method of acquiring the IP address of the UE described in Step 3 will be described.

In 5G, the copy for UE 30 acquires the IP address of the UE from the SMF by using an 5G API. In such a manner, the copy for UE 30 can acquire the IP address corresponding to the ID of the UE by using the API of the SMF for the multicast service.

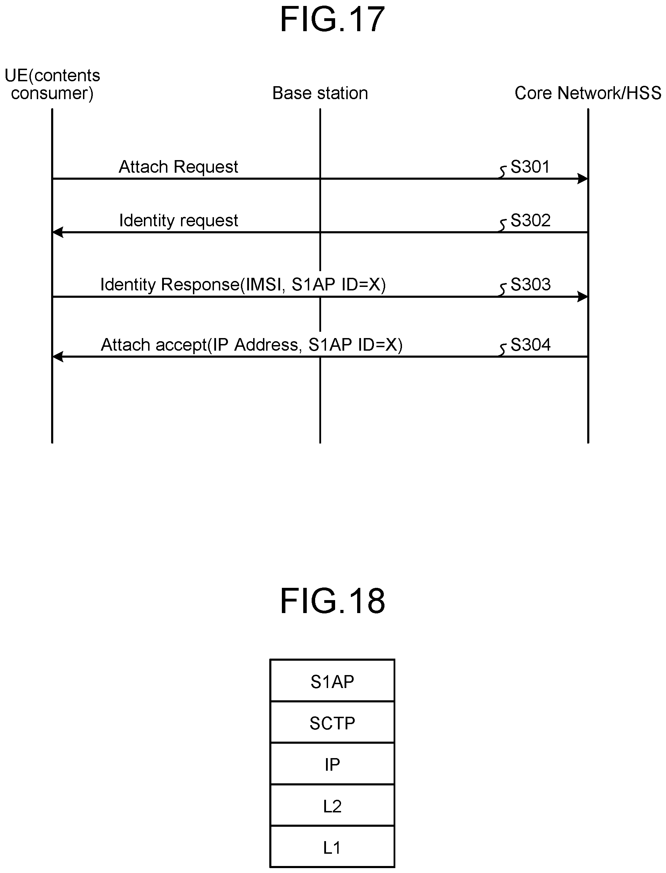

On the other hand, in a case of 4G, the copy for UE 30 acquires an IP address of UE by sniffing (wiretapping) a packet in the attach procedure. Here, an example of the attach procedure performed between UE, which is a contents consumer, and Core Network/HSS will be described with reference to FIG. 17. FIG. 17 is a sequence diagram illustrating a flow of the attach procedure.

As illustrated in FIG. 17, first, the UE transmits an Attach ReqUEst to the Core Network/HSS (Step S301). The Core Network/HSS transmits an Identity reqUEst to the UE (Step S302).

Subsequently, the UE transmits an Identity Response to the Core Network/HSS (Step S303). The Identity Response includes information related to an IMSI (example of identification information of a terminal device) and an ID of S1AP (example of a session ID of communication).

The Core Network/HSS transmits an Attach accept to the UE (Step S304). The Attach accept includes information related to an IP address and the ID of the S1AP.

The copy for UE 30 performs sniffing (wiretapping) of the packet in the attach procedure illustrated in FIG. 17. For example, the copy for UE 30 associates the IMSI with the IP address by using the information related to the IMSI and the ID of the S1AP (example of first correspondence information) exchanged in Step S303 and the information of the IP address and the ID the S1AP (example of second correspondence information) exchanged in Step S304. As a result, the copy for UE 30 acquires the IP address of each piece of UE.

Note that although a procedure related to the attach procedure is performed between Step S303 and Step S304, description thereof is omitted here. In addition, the Core Network/HSS may execute the attach procedure with other UE. In this case, by confirming the ID of the S1AP, the copy for UE 30 can recognize whether the procedure is for the same UE.

Next, details of the IP address using the attach procedure by the copy for UE 30 will be described.

### [Step1]

The copy for UE 30 catches a packet having an S1AP Layer on an SCTP layer. Here, a protocol stack of the S1AP is illustrated in FIG. 18. FIG. 18 is a view illustrating an example of the protocol stack between the UE and the Core Network/HSS. As illustrated in FIG. 18, the S1AP is a protocol carried in an SCTP protocol above IP, and the IMSI and the IP address of the UE are carried as information in the S1AP.

### [Step2]

The copy for UE 30 sees messages of the S1AP line by line and cuts out information by using three keywords of "ENB-UE-S1 AP-ID", "IMSI", and "PDN IPv4" as clues.

### [Step3]

The copy for UE 30 holds the following two Lists with an upper limit of the number of pieces of UE that may perform the attach procedure at the same time as NumberMaxUE.

```
     sList_State_S1ID[NumberMaxUE]
     sList_State_IMSI[NumberMaxUE]
```

When receiving a packet having the information of the IMSI, the copy for UE 30 stores the information of the IMSI in sList_State_IMSI [for example, index = 4], and stores the S1ID at that time in sList_State_S1ID [for example, index = 4]. Here, before storing the S1ID, the copy for UE 30 checks whether one that is the same as the S1ID is present in the sList_State_S1ID[], and erases the same when there is one. As a result, the copy for UE 30 can remove a ghost at the time of an error.

Then, when receiving a packet having the information of the IP address, the copy for UE 30 checks whether one that is the same as the S1ID at that time is in sList_State_S1 ID[]. In a case where there is the one that is the same as the S1ID, the copy for UE 30 extracts the IP address from corresponding sLikst_State_IMSI[]. At that time, the copy for UE 30 initializes contents of extracted sList_State_S1 ID [for example, index = 4] and sList_State_IMSI [for example, index = 4].

As a result, the copy for UE 30 can associate the IMSI and the IP address with each other, and can acquire the IP address for each piece of UE.

In the technology of the present disclosure, the copy for UE 30 copies the multicast packet after determining whether the UE has acquired the IP address. Thus, unnecessary copying of the packet by the copy for UE 30 can be controlled, and a processing load of the copy for UE 30 can be reduced.

In addition, as described above, by setting an upper limit to the number of pieces of UE that belong to one multicast channel and that belong to one UPF 10, it is possible to set an upper limit to the number of copies of a packet by copy for UE 30. As a result, the processing load of the copy for UE 30 can be reduced, and a probability of congestion can be reduced.

The copy for UE 30 can transfer the packet immediately after acquiring the IP address. That is, the multicast may be started immediately after the UE acquires the IP address. Thus, for example, in a case where a plurality of pieces of UE is controlled by the multicast, control of the pieces of UE can be started immediately after the power is turned on.

### <<11. Application example>>

The multicast in each of the above-described embodiments can be applied to various use cases. Here, a case where the private network described in the first embodiment is used for film shooting will be described as an example.

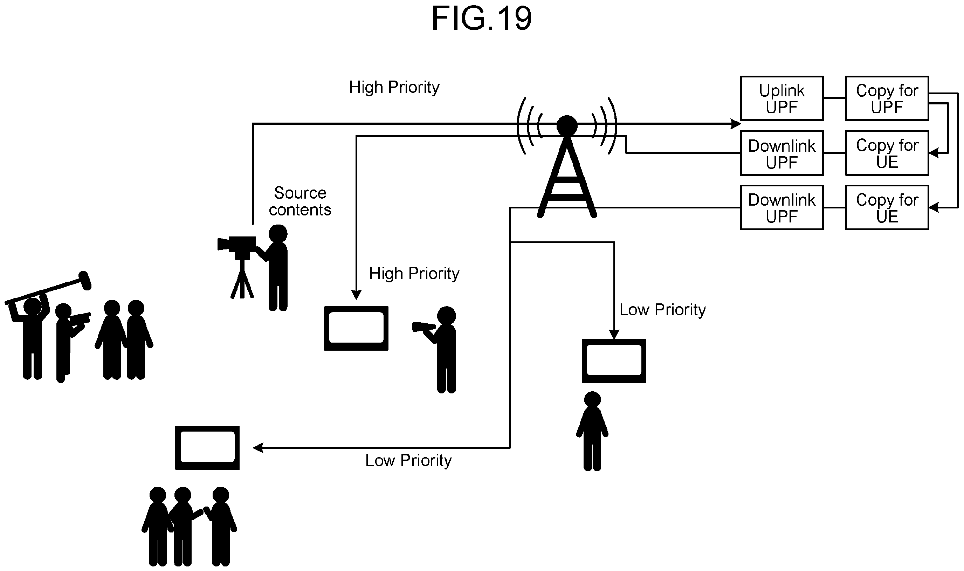

FIG. 19 is a view for describing an application example of the technology of present disclosure. As illustrated in FIG. 19, in a case where the private network is used for film shooting, a captured video is uploaded to the private network. When the uploaded video is multicast-transmitted to a monitor connected to the private network, a movie director and staffs view the captured video.

In this case, for example, a camera that captures the film corresponds to UE that is source contents. The camera uploads the captured video to the uplink UPF. In such a manner, when the uplink UPF that processes the upload of the video is arranged in the private network, the captured video can be uploaded with high priority.

In addition, the uploaded video is copied by the copy for a UPF and transferred to the downlink UPF via the copy for UE. In the copy for UE, the uploaded video is copied and transferred for each piece of UE that is a contents consumer (such as a monitor).

At this time, for example, it is assumed that a monitor viewed by the movie director is set to have high priority, and monitors of staffs other than the movie director are set to have low priority. For example, the monitor viewed by the movie director is associated with one downlink UPF and the plurality of monitors viewed by the other staffs is collectively associated with one downlink UPF, whereby the setting of the priority is performed.

In such a manner, by setting the priority according to the UE (here, the monitor), it is possible to preferentially transmit the multicast packet (such as the captured video) to the important UE such as the monitor viewed by the movie director.

### <<12. Conclusion>>

The above-described embodiments are examples, and various kinds of modification and application are possible. In addition, the above-described embodiments can be arbitrarily combined in a range in which the processing contents do not contradict each other.

In addition, a program for executing the above-described operation is stored in a computer-readable recording medium such as an optical disk, a semiconductor memory, a magnetic tape, or a flexible disk and distributed. Then, for example, the program is installed in a computer and the above-described processing is executed, whereby the control device is configured. At this time, the control device may be a device (such as a personal computer) outside the copy for a UPF 20 and the copy for UE 30. Furthermore, the control device may be a device inside the copy for a UPF 20 and the copy for UE 30 (such as the control units 23 and 33).

Furthermore, the program may be stored in a disk device included in a server device on a network such as the Internet and may be made downloadable to a computer, for example. In addition, the above-described functions may be realized by cooperation of an operating system (OS) and application software. In this case, a portion other than the OS may be stored in a medium and distributed, or the portion other than the OS may be stored in a server device and downloaded to a computer.

Also, among the pieces of processing described in the above embodiments, all or a part of the processing described to be automatically performed can be manually performed, or all or a part of the processing described to be manually performed can be automatically performed by a known method. In addition, the processing procedures, specific names, and information including various kinds of data or parameters described in the above document or in the drawings can be arbitrarily changed unless otherwise specified. For example, various kinds of information illustrated in each of the drawings are not limited to the illustrated information.

Also, each component of each of the illustrated devices is a functional concept, and does not need to be physically configured in the illustrated manner. That is, a specific form of distribution/integration of each device is not limited to what is illustrated in the drawings, and a whole or part thereof can be functionally or physically distributed/integrated in an arbitrary unit according to various loads and usage conditions.

In addition, the above-described embodiments can be arbitrarily combined in a region in which the processing contents do not contradict each other. Furthermore, order of steps illustrated in the flowchart and the sequence diagram of the above-described embodiments can be changed as appropriate.

Furthermore, for example, the present embodiment can be implemented as any configuration included in a device or a system, such as a processor as a system large scale integration (LSI) or the like, a module that uses a plurality of processors or the like, a unit that uses a plurality of modules or the like, a set acquired by further addition of other functions to the unit, or the like (that is, a configuration of a part of the device).

Note that a system means a set of a plurality of components (such as devices and modules (parts)), and it does not matter whether all the components are in the same housing in the present embodiment. Thus, a plurality of devices housed in separate housings and connected via a network, and one device in which a plurality of modules is housed in one housing are both systems.

Furthermore, for example, the present embodiment can adopt a configuration of cloud computing in which one function is shared and processed by a plurality of devices in cooperation via a network.

Although embodiments of the present disclosure have been described above, a technical scope of the present disclosure is not limited to the above-described embodiments as they are, and various modifications can be made within the spirit and scope of the present disclosure. In addition, components of different embodiments and modification examples may be arbitrarily combined.

Also, an effect in each of the embodiments described in the present specification is merely an example and is not a limitation, and there may be another effect.

Note that the present technology can also have the following configurations.
(1) A relay device provided in a manner of corresponding to one or a plurality of first user plane functions (UPF), the relay device comprising:
   a control unit that converts multicast data into unicast data addressed to one or a plurality of terminal devices; and
   a transmission unit that transmits the unicast data to the one or plurality of terminal devices.
(2) The relay device according to (1), wherein the one or plurality of first UPFs is set as a UPF that performs downlink transmission of the multicast data.
(3) The relay device according to (1) or (2), wherein the control unit receives the multicast data from a second UPF that performs uplink transmission of the multicast data.
(4) The relay device according to (3), wherein the one or plurality of first UPFs is set as a UPF different from the second UPF.
(5) The relay device according to (3) or (4), wherein the control unit receives the multicast data from the second UPF via a second relay device that relays the multicast data.
(6) The relay device according to (5), wherein the second relay device relays the multicast data to the one or plurality of first UPFs in order corresponding to priority of the one or plurality of terminal devices corresponding to the one or plurality of first UPFs.
(7) The relay device according to any one of (1) to (6), wherein the control unit reproduces the multicast data in order corresponding to priority of the one or plurality of terminal devices and performs conversion thereof into the unicast data.
(8) The relay device according to any one of (1) to (6), wherein the control unit generates the unicast data to be transmitted to the one or plurality of terminal devices a number of which corresponds to priority.
(9) The relay device according to any one of (3) to (6), wherein
   the terminal device receives selection information for selecting the first UPF or the second UPF, and
   the selection information is included in information related to a network slice and transmitted.
(10) The relay device according to any one of (1) to (9), wherein
   the control unit
   acquires address information related to an IP address acquired by the terminal device that desires to receive the multicast data, and
   generates the unicast data on a basis of the address information.
(11) The relay device according to (10), wherein the control unit generates the unicast data by converting a destination of the multicast data into the IP address acquired by the terminal device.
(12) The relay device according to (10) or (11), wherein the control unit acquires the address information from a session management function (SMF).
(13) The relay device according to (10) or (11), wherein
   the control unit
   acquires, from first attach information transmitted when the terminal device is attached to a network, first correspondence information in which identification information of the terminal device and a session ID of communication are associated with each other,
   acquires, from second attach information received when the terminal device is attached to the network, second correspondence information in which the IP address assigned to the terminal device and the session ID are associated with each other, and
   associates, in a case where the session ID of the first correspondence information and the session ID of the second correspondence information are same, the identification information of the terminal device and the IP address with each other, each of the identification information and the IP address corresponding to the session ID.
(14) A method in which a relay device provided in a manner of corresponding to one or a plurality of first user plane functions (UPF) relays data, the method comprising:
   converting multicast data into unicast data addressed to one or a plurality of terminal devices; and
   transmitting the unicast data to the one or plurality of terminal devices.

### Reference Signs List

- 10: UPF
- 20: Copy for a UPF
- 21, 31: COMMUNICATION UNIT
- 22, 32: STORAGE UNIT
- 23, 33: CONTROL UNIT
- 30: Copy for UE

## Claims

1. A relay device provided in a manner of corresponding to one or a plurality of first user plane functions (UPF), the relay device comprising:
a control unit that converts multicast data into unicast data addressed to one or a plurality of terminal devices; and
a transmission unit that transmits the unicast data to the one or plurality of terminal devices.

2. The relay device according to claim 1, wherein the one or plurality of first UPFs is set as a UPF that performs downlink transmission of the multicast data.

3. The relay device according to claim 2, wherein the control unit receives the multicast data from a second UPF that performs uplink transmission of the multicast data.

4. The relay device according to claim 3, wherein the one or plurality of first UPFs is set as a UPF different from the second UPF.

5. The relay device according to claim 3, wherein the control unit receives the multicast data from the second UPF via a second relay device that relays the multicast data.

6. The relay device according to claim 5, wherein the second relay device relays the multicast data to the one or plurality of first UPFs in order corresponding to priority of the one or plurality of terminal devices corresponding to the one or plurality of first UPFs.

7. The relay device according to claim 1, wherein the control unit reproduces the multicast data in order corresponding to priority of the one or plurality of terminal devices and performs conversion thereof into the unicast data.

8. The relay device according to claim 1, wherein the control unit generates the unicast data to be transmitted to the one or plurality of terminal devices a number of which corresponds to priority.

9. The relay device according to claim 3, wherein
the terminal device receives selection information for selecting the first UPF or the second UPF, and
the selection information is included in information related to a network slice and transmitted.

10. The relay device according to claim 1, wherein
the control unit
acquires address information related to an IP address acquired by the terminal device that desires to receive the multicast data, and
generates the unicast data on a basis of the address information.

11. The relay device according to claim 10, wherein the control unit generates the unicast data by converting a destination of the multicast data into the IP address acquired by the terminal device.

12. The relay device according to claim 10, wherein the control unit acquires the address information from a session management function (SMF).

13. The relay device according to claim 10, wherein
the control unit
acquires, from first attach information transmitted when the terminal device is attached to a network, first correspondence information in which identification information of the terminal device and a session ID of communication are associated with each other,
acquires, from second attach information received when the terminal device is attached to the network, second correspondence information in which the IP address assigned to the terminal device and the session ID are associated with each other, and
associates, in a case where the session ID of the first correspondence information and the session ID of the second correspondence information are same, the identification information of the terminal device and the IP address with each other, each of the identification information and the IP address corresponding to the session ID.

14. A method in which a relay device provided in a manner of corresponding to one or a plurality of first user plane functions (UPF) relays data, the method comprising:
converting multicast data into unicast data addressed to one or a plurality of terminal devices; and
transmitting the unicast data to the one or plurality of terminal devices.
